(19) **Europäisches Patentamt / European Patent Office / Office européen des brevets**

(11) **EP 4 716 143 A1**

(12) **EUROPEAN PATENT APPLICATION**
published in accordance with Art. 153(4) EPC

(43) Date of publication:
**25.03.2026 Bulletin 2026/13**

(21) Application number: **24818443.4**

(22) Date of filing: **13.05.2024**

(51) International Patent Classification (IPC):
**H04L 7/04** (2006.01)

(52) Cooperative Patent Classification (CPC):
**H04L 5/00; H04L 7/04**

(86) International application number:
**PCT/CN2024/092935**

(87) International publication number:
**WO 2024/250910 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.06.2023 CN 202310679466**

(71) Applicant: **Huawei Technologies Co., Ltd.
Shenzhen, Guangdong 518129 (CN)**

(72) Inventors:
• **YU, Qian
  Shenzhen, Guangdong 518129 (CN)**
• **MA, Changzheng
  Shenzhen, Guangdong 518129 (CN)**
• **YANG, Yifei
  Shenzhen, Guangdong 518129 (CN)**

(74) Representative: **Gill Jennings & Every LLP
The Broadgate Tower
20 Primrose Street
London EC2A 2ES (GB)**

(54) **PHASE DETERMINATION METHOD AND APPARATUS**

(57) A phase determining method and an apparatus are provided, which are applied to the field of communication technologies, for example, applied to a UWB-based WPAN system, for example, an 802.15.4a protocol, an 802.15.4z protocol, or an 802.15.4ab protocol in 802.15 series protocols, and also applied to a sensing system. The method includes: A transmit end generates a first frame, and then sends the first frame. In this way, a receive end may receive the first frame, and determine phase information based on the first frame. The first frame may include a first CTS, the first CTS includes at least two segment groups, a time interval between adjacent segments in each segment group is a first time interval, and a time interval between adjacent segment groups is a second time interval. Coverage of the first frame is effectively improved.

FIG. 6

## Description

This application claims priority to Chinese Patent Application No. 202310679466.8, filed with the China National Intellectual Property Administration on June 8, 2023 and entitled "PHASE DETERMINING METHOD AND APPARATUS", which is incorporated herein by reference in its entirety.

## TECHNICAL FIELD

This application relates to the field of communication technologies, and in particular, to a phase determining method and an apparatus.

## BACKGROUND

With the advent of the Internet of Everything era, an ultra-wide band (ultra-wide band, UWB) wireless technology is increasingly widely used in daily life. Compared with other wireless technologies (such as Wi-Fi and Bluetooth), the ultra-wide band wireless technology is characterized by a very narrow impulse signal (such as a nanosecond (ns) level). This enables the ultra-wide band wireless technology to have a good multipath resolution capability, thereby ensuring centimeter-level ranging precision and angle measurement precision of 3 degrees to 5 degrees in a complex indoor multipath environment.

According to power spectral density (power spectral density, PSD) requirements stipulated in the regulations on UWB frequency band usage by the Federal Communications Commission (Federal Communications Commission, FCC) and Ministry of Industry and Information Technology of China, transmit power of the UWB cannot exceed -41.3 dBm/MHz. In addition, when the UWB wireless technology is applied to positioning, an operating frequency band usually used ranges from 6 gigahertz to 9 gigahertz (GHz), and signal attenuation on this frequency band is large. All these factors result in a limited coverage capability of a conventional UWB positioning device.

Therefore, in a phase information-based positioning or sensing technology, how to improve coverage of a signal is a problem that is being studied by a person skilled in the art.

## SUMMARY

Embodiments of this application provide a phase determining method and an apparatus, to effectively improve signal coverage.

According to a first aspect, an embodiment of this application provides a phase determining method. The method is applied to a transmit end. The transmit end shown herein may be a device, or may be a processor, a module, a chip, a chip system, or the like that implements the method in the device. The method includes:

generating a first frame, where the first frame includes a first channel impulse response (channel impulse response, CIR) training sequence (CIR training sequence, CTS), the first CTS includes at least two segment groups, a time interval between adjacent segments in each segment group is a first time interval, a time interval between adjacent segment groups in the at least two segment groups is a second time interval, and the second time interval is greater than the first time interval; and sending the first frame.

In this embodiment of this application, the time interval (that is, the first time interval) between segments in the first frame and the time interval (that is, the second time interval) between the segment groups are configured in an unequal interval manner. Setting of the first time interval can ensure that the transmit end or a receive end has sufficient time to perform antenna switching, reduce a frequency offset estimation error, alleviate impact of a clock jitter on measurement precision, and improve measurement precision. Setting of the second time interval can effectively reduce average impulse density and improve coverage of a radio frame. Therefore, based on the method shown in this embodiment of this application, coverage of the first frame is further increased when precision of phase information is increased.

In a possible implementation, the first frame further includes a synchronization field.

In a possible implementation, before sending the first frame, the method further includes: sending a second frame, where the second frame includes a synchronization field and a second CTS.

In a possible implementation, the second CTS includes at least two segment groups, a time interval between adjacent segments in each segment group is the first time interval, a time interval between adjacent segment groups in the at least two segment groups is the second time interval, and the second time interval is greater than the first time interval.

In a possible implementation, before sending the first frame, the method further includes: sending a third frame, where the third frame includes a synchronization field.

In a possible implementation, the at least two segment groups include a first segment group, and a quantity of segments in the first segment group is determined based on at least one of a quantity of receive channels and a quantity of receive antennas in a receive end, where the quantity of receive channels is a quantity of receive channels in the receive end that are used for receiving the first frame, and the quantity of receive antennas is a quantity of receive antennas in the receive end that are used for receiving the first frame.

In a possible implementation, the at least two segment groups include a first segment group, and a quantity of segments in the first segment group is determined based on a quantity of receive antennas in a receive end that are used for receiving the first frame.

In a possible implementation, each segment in the first segment group corresponds to one receive antenna that is in the receive end and that is used for receiving the first frame.

In a possible implementation, the at least two segment groups include a first segment group, and a quantity of segments in the first segment group is determined based on at least one of a quantity of transmit channels and a quantity of transmit antennas in the transmit end, where the quantity of transmit channels is a quantity of transmit channels in the transmit end that are used for sending the first frame, and the quantity of transmit antennas is a quantity of transmit antennas in the transmit end that are used for sending the first frame.

In a possible implementation, the at least two segment groups include a first segment group, and a quantity of segments in the first segment group is determined based on a quantity of transmit antennas in a transmit end that are used for sending the first frame.

In a possible implementation, each segment in the first segment group corresponds to one transmit antenna that is in the transmit end and that is used for sending the first frame.

In a possible implementation, a transmit channel included in the transmit end corresponds to at least two transmit antennas, and sending the first frame includes: sending segments of the CTS in the first frame in turn by using the at least two transmit antennas corresponding to the transmit channel.

In a possible implementation, the method is applied to an ultra-wide band UWB system.

According to a second aspect, an embodiment of this application provides a phase determining method. The method is applied to a receive end. The receive end shown herein may be a device, or may be a processor, a module, a chip, a chip system, or the like that implements the method in the device. The method includes: receiving a first frame, where the first frame includes a first channel impulse response CIR training sequence CTS, the first CTS includes at least two segment groups, a time interval between adjacent segments in each segment group is a first time interval, a time interval between adjacent segment groups in the at least two segment groups is a second time interval, and the second time interval is greater than the first time interval; and determining phase information based on the first frame.

In a possible implementation, the first frame further includes a synchronization field.

In a possible implementation, before receiving the first frame, the method further includes: receiving a second frame, where the second frame includes a synchronization field and a second CTS.

In a possible implementation, the second CTS includes at least two segment groups, a time interval between adjacent segments in each segment group is the first time interval, a time interval between adjacent segment groups in the at least two segment groups is the second time interval, and the second time interval is greater than the first time interval.

In a possible implementation, before receiving the first frame, the method further includes: receiving a third frame, where the third frame includes a synchronization field.

In a possible implementation, the method further includes: performing automatic gain control (automatic gain control, AGC) adjustment based on the synchronization field, to obtain an AGC gain of a receive antenna that is in a receive end and that is used for receiving the first frame.

In a possible implementation, the receive end includes at least two receive channels, and receiving the first frame includes: receiving the first frame by using each receive channel in the at least two receive channels.

In a possible implementation, the phase information includes an angle of arrival (angle of arrival, AOA), the at least two segment groups include a first segment group, and a quantity of segments in the first segment group is determined based on at least one of a quantity of receive channels and a quantity of receive antennas in the receive end, where the quantity of receive channels is a quantity of receive channels in the receive end that are used for receiving the first frame, and the quantity of receive antennas is a quantity of receive antennas in the receive end that are used for receiving the first frame.

In a possible implementation, the at least two segment groups include a first segment group, and a quantity of segments in the first segment group is determined based on a quantity of receive antennas in a receive end that are used for receiving the first frame.

In a possible implementation, each segment in the first segment group corresponds to one receive antenna that is in the receive end and that is used for receiving the first frame.

In a possible implementation, one receive channel included in the receive end corresponds to at least two receive antennas, and receiving the first frame includes: receiving segments of the CTS in the first frame in turn by using the at least two receive antennas corresponding to the receive channel.

In a possible implementation, the phase information includes an angle of departure (angle of departure, AOD), the at least two segment groups include a first segment group, and a quantity of segments in the first segment group is determined based on at least one of a quantity of transmit channels and a quantity of transmit antennas in a transmit end, where the quantity of transmit channels is a quantity of transmit channels in the transmit end that are used for sending the first frame, and the quantity of transmit antennas is a quantity of transmit antennas in the transmit end that are used for sending the first frame.

In a possible implementation, the at least two segment groups include a first segment group, and a quantity of segments in the first segment group is determined based on a quantity of transmit antennas in a transmit end that are used for sending the first frame.

In a possible implementation, each segment in the first segment group corresponds to one transmit antenna that is in the transmit end and that is used for sending the first frame.

In a possible implementation, the method is applied to an ultra-wide band UWB system.

According to a third aspect, an embodiment of this application provides a transmit end, configured to perform the method according to any one of the first aspect or the possible implementations of the first aspect. The transmit end includes units configured to perform the method according to any one of the first aspect or the possible implementations of the first aspect.

According to a fourth aspect, an embodiment of this application provides a receive end, configured to perform the method in any one of the second aspect or the possible implementations of the second aspect. The receive end includes units configured to perform the method according to any one of the second aspect or the possible implementations of the second aspect.

According to a fifth aspect, an embodiment of this application provides a transmit end. The transmit end includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the transmit end.

In a possible implementation, the memory is located inside the transmit end.

In this embodiment of this application, the processor and the memory may alternatively be integrated into one device. In other words, the processor and the memory may alternatively be integrated together.

In a possible implementation, the transmit end further includes a transceiver. The transceiver is configured to receive a signal or send a signal. For example, the transceiver may be further configured to send a first frame. For example, the transceiver may be further configured to send a second frame, a third frame, and the like.

According to a sixth aspect, an embodiment of this application provides a receive end. The receive end includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the receive end.

In a possible implementation, the memory is located inside the receive end.

In this embodiment of this application, the processor and the memory may alternatively be integrated into one device. In other words, the processor and the memory may alternatively be integrated together.

In a possible implementation, the receive end further includes a transceiver. The transceiver is configured to receive a signal or send a signal. For example, the transceiver may be configured to receive a first frame, a second frame, a third frame, and the like.

According to a seventh aspect, an embodiment of this application provides a transmit end. The transmit end includes a logic circuit and an interface. The logic circuit is coupled to the interface. The interface is configured to input and/or output information. The logic circuit is configured to perform the method according to any one of the first aspect or the possible implementations of the first aspect. That the interface is configured to output the information may include: The interface is configured to output a first frame, a second frame, a third frame, and the like.

For example, the logic circuit is configured to generate a first frame, a second frame, a third frame, and the like.

According to an eighth aspect, an embodiment of this application provides a receive end. The receive end includes a logic circuit and an interface. The logic circuit is coupled to the interface. The interface is configured to input and/or output information. The logic circuit is configured to perform the method according to any one of the second aspect or the possible implementations of the second aspect. That the interface is configured to input the information may include: The interface is configured to input a first frame, a second frame, a third frame, and the like.

For example, the logic circuit is configured to determine phase information based on the first frame.

According to a ninth aspect, an embodiment of this application provides a computer-readable storage medium. The computer-readable storage medium is configured to store a computer program, and when the computer program is run on a computer, the method according to any one of the first aspect, the second aspect, or the possible implementations of the first aspect and the second aspect is performed.

According to a tenth aspect, an embodiment of this application provides a computer program product. The computer program product includes a computer program or computer code, and when the computer program or the computer code is run on a computer, the method according to any one of the first aspect, the second aspect, or the possible implementations of the first aspect and the second aspect is performed.

According to an eleventh aspect, an embodiment of this application provides a computer program. When the computer program is run on a computer, the method according to any one of the first aspect, the second aspect, or the possible implementations of the first aspect and the second aspect is performed.

According to a twelfth aspect, an embodiment of this application provides a communication system. The communication system includes a transmit end and a receive end. The transmit end is configured to perform the method according to any one of the first aspect or the possible implementations of the first aspect, and the receive end is configured to perform the method according to any one of the second aspect or the possible implementations of the second aspect.

## BRIEF DESCRIPTION OF DRAWINGS

FIG. 1 is a diagram of a format of a physical layer (physical, PHY) protocol data unit (PHY protocol data unit, PPDU) according to an embodiment of this application;

FIG. 2a is a diagram of a plurality of receive channels according to an embodiment of this application;

FIG. 2b is a diagram of a single receive channel according to an embodiment of this application;

FIG. 3a is a diagram of AOA measurement according to an embodiment of this application;

FIG. 3b is a diagram of AOD measurement according to an embodiment of this application;

FIG. 4 is a diagram of a specific manner of AOA measurement according to an embodiment of this application;

FIG. 5a to FIG. 5d are diagrams of formats of a radio frame according to an embodiment of this application;

FIG. 6 is a schematic flowchart of a phase determining method according to an embodiment of this application;

FIG. 7a is a diagram of a scenario of a phase determining method according to an embodiment of this application;

FIG. 7b is a diagram of receiving a radio frame corresponding to FIG. 7a according to an embodiment of this application;

FIG. 7c is a diagram of sending a radio frame according to an embodiment of this application;

FIG. 8a is a diagram of a scenario of a phase determining method according to an embodiment of this application;

FIG. 8b is a diagram of receiving a radio frame corresponding to FIG. 8a according to an embodiment of this application;

FIG. 8c is a diagram of sending a radio frame according to an embodiment of this application;

FIG. 9a is a diagram of a scenario of a phase determining method according to an embodiment of this application;

FIG. 9b is a diagram of receiving a radio frame corresponding to FIG. 9a according to an embodiment of this application;

FIG. 9c is a diagram of sending a radio frame according to an embodiment of this application;

FIG. 10a is a diagram in which a quantity of receive channels is less than a quantity of receive antennas according to an embodiment of this application;

FIG. 10b is a diagram in which a quantity of transmit channels is less than a quantity of transmit antennas according to an embodiment of this application;

FIG. 11a is a diagram of a scenario of a phase determining method according to an embodiment of this application;

FIG. 11b is a diagram of receiving a radio frame corresponding to FIG. 11a according to an embodiment of this application;

FIG. 11c is a diagram of sending a radio frame according to an embodiment of this application;

FIG. 12a is a diagram of a scenario of a phase determining method according to an embodiment of this application;

FIG. 12b is a diagram of receiving a radio frame corresponding to FIG. 12a according to an embodiment of this application;

FIG. 12c is a diagram of sending a radio frame according to an embodiment of this application;

FIG. 13a is a diagram of a scenario of a phase determining method according to an embodiment of this application;

FIG. 13b is a diagram of receiving a radio frame corresponding to FIG. 13a according to an embodiment of this application;

FIG. 13c is a diagram of sending a radio frame according to an embodiment of this application; and

FIG. 14 to FIG. 16 are diagrams of structures of a communication apparatus according to an embodiment of this application.

## DESCRIPTION OF EMBODIMENTS

For ease of understanding technical solutions of this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that particular features, structures, or characteristics described with reference to embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

The technical solutions provided in embodiments of this application may be applicable to a UWB technology-based wireless personal area network (wireless personal area network, WPAN). For example, the method provided in embodiments of this application may be applicable to IEEE 802.15 series protocols such as an 802.15.4a protocol, an 802.15.4z protocol, an 802.15.4ab protocol, or a future-generation UWB WPAN standard. Examples are not listed one by one herein. For example, the technical solutions provided in embodiments of this application may support Wi-Fi 7, which may also be referred to as an extremely high throughput (extremely high throughput, EHT), or may support, for example, Wi-Fi 8, which may also be referred to as ultra high reliability (ultra high reliability, UHR), ultra high reliability and throughput (ultra high reliability and throughput, UHRT), or the like. Alternatively, the method provided in embodiments of this application may be further applied to various communication systems, for example, an Internet of Things (Internet of Things, IoT) system, vehicle to X (vehicle to X, V2X), or a narrowband Internet of Things (narrowband Internet of Things, NB-IoT) system. For another example, the method may also be applied to a device in the vehicle to X, an Internet of Things node or a sensor in the Internet of things (IoT, Internet of Things), a smart camera, a smart remote control, and smart water and electricity meters in a smart home, a sensor in a smart city, and the like. For another example, the method may also be applied to an LTE frequency division duplex (frequency division duplex, FDD) system, an LTE time division duplex (time division duplex, TDD) system, a long term evolution (long term evolution, LTE) system, a 5th-generation (5th-generation, 5G) communication system, a 6th-generation (6th-generation, 6G) communication system, and the like.

For example, the technical solutions provided in embodiments of this application may be applicable to various UWB positioning systems, or may be extended to a narrowband positioning system, a different convergence system, or the like. Bandwidths, frequencies, and the like of a narrowband signal and a wideband signal are not limited in embodiments of this application. For example, embodiments of this application may be applied to different antenna arrangement manners, and may be applicable to 2-D angle positioning, 3-D angle positioning, and the like. Examples are not listed one by one.

The method provided in embodiments of this application may be implemented by a communication apparatus in a wireless communication system. The communication apparatus may be an apparatus in a UWB system. For example, the communication apparatus may include but is not limited to a communication server, a router, a switch, a bridge, a computer, and a mobile phone. For another example, the communication apparatus may include a central control point, for example, a personal area network (personal area network, PAN) or a PAN coordinator. For another example, the communication apparatus may include user equipment (user equipment, UE) (or referred to as a terminal or the like). The user equipment may include various handheld devices, in-vehicle devices, wearable devices, Internet of Things (Internet of Things, IoT) devices, computing devices, or other processing devices connected to a wireless modem that have a wireless communication function. For another example, the communication apparatus may include a chip (or a chip system or the like), and the chip may be disposed in a communication server, a router, a switch, a terminal, or the like. For another example, the communication apparatus may include a functional module, and the functional module may be disposed in a communication server, a router, a switch, a terminal, or the like. The description of the communication apparatus shown herein is also applicable to the transmit end and the receive end shown below. The transmit end shown below is a communication apparatus configured to send a first frame, and the receive end is a communication apparatus configured to receive the first frame. Alternatively, the receive end is a communication apparatus that determines phase information based on a received signal (for example, a first frame, a second frame, or a third frame).

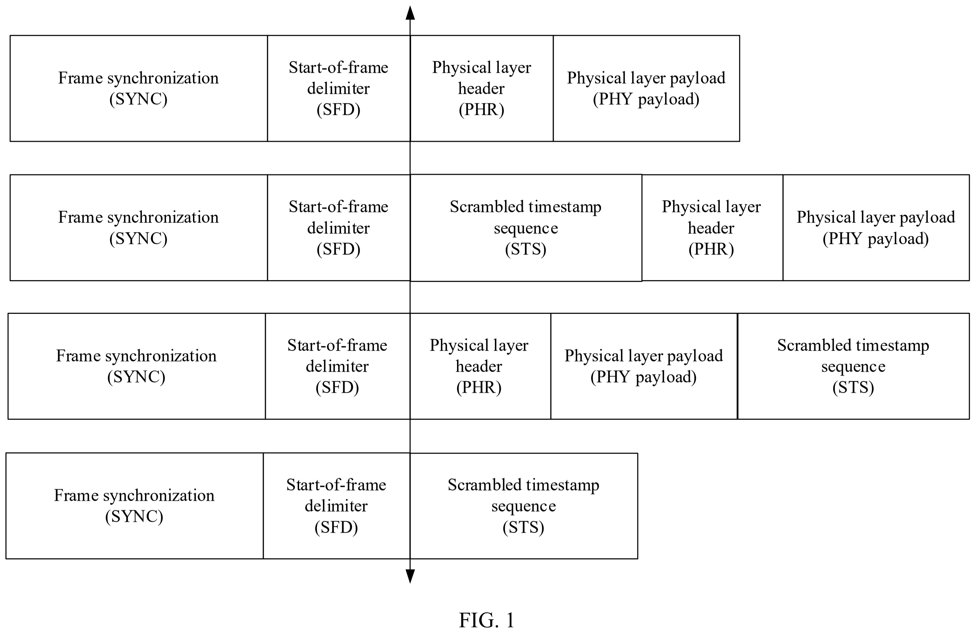

There is an impulse radio (impulse radio, IR) UWB (that is, IR-UWB) communication, and a physical layer (physical, PHY) protocol data unit (PHY protocol data unit, PPDU) format in the field of IR-UWB communication may be shown in FIG. 1. FIG. 1 shows a format defined in a UWB protocol whose IR-UWB communication and positioning protocol is IEEE 802.15.4a or IEEE 802.15.4z. A PPDU shown in FIG. 1 may support data transmission, ranging, and angle measurement functions. As shown in FIG. 1, the PPDU may include a frame synchronization (synchronization, SYNC), a start-of-frame delimiter (start-of-frame delimiter, SFD), a physical layer header (physical layer header, PHR), and a physical layer payload (PHY payload) (or referred to as physical payload); or the PPDU may include a SYNC, an SFD, a scrambled timestamp sequence (scrambled timestamp sequence, STS), a PHR, and physical payload; or the PPDU includes a SYNC, an SFD, and an STS.

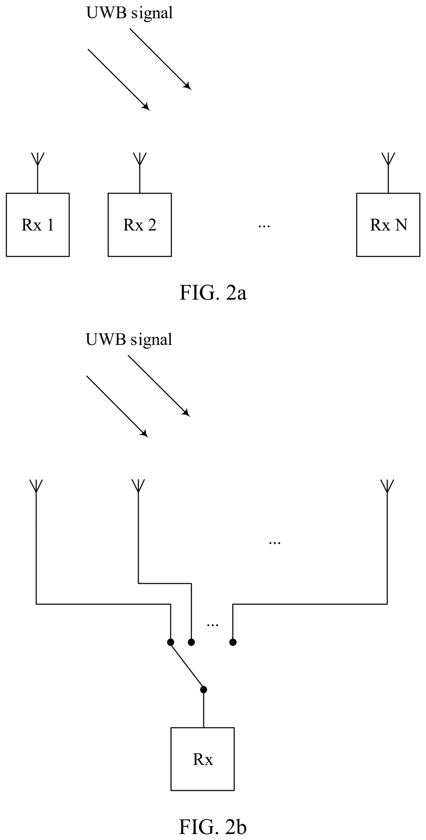

For example, the SYNC may be used for signal synchronization, channel estimation (or channel measurement), and the like. The SFD may be used to separate a SYNC field from a subsequent part. For example, the SFD may be used to separate the SYNC from the PHR. For another example, the SFD may be used to separate the SYNC from the STS, and the like. Examples are not listed one by one. The PHR may indicate some parameters required for demodulating a physical layer payload field, such as length information, a data transmission rate, and an encoding type of the physical layer payload field, to assist the receive end in correctly demodulating data. The physical layer payload may be used to carry data. The STS may be used as a secure ranging sequence, and is used to complete ranging, angle measurement, and other functions. For example, in an AOA angle measurement manner based on a single receive channel, the transmit end may divide the STS into a plurality of signal segments (an interval (gap) is inserted between the plurality of signal segments, for example, maximum duration of the interval may be 1 $\mu$s), so that the receive end can perform antenna switching at the interval between the plurality of signal segments. It may be understood that the PPDU shown in FIG. 1 may also be applied to a plurality of receive channels shown in FIG. 2a. For related descriptions of the plurality of receive channels, refer to the following descriptions of the single receive channel. The plurality of receive channels are not described in detail herein.

FIG. 2b is a diagram of a single receive channel according to an embodiment of this application. Rx shown in FIG. 2b may be understood as one receive channel, and the receive channel corresponds to a plurality of antennas. A type of antennas that are switched on one receive channel, as shown in FIG. 2b, is merely an example. In a specific implementation, an antenna connected to the receive channel may be a single antenna, an antenna array, or the like. This is not limited in embodiments of this application. As shown in FIG. 2b, the receive end may be connected to the plurality of antennas in a time division manner based on one receive channel in an antenna switching manner, to receive a UWB signal (the UWB signal may also be understood as the PPDU shown in FIG. 1) in a time division manner by using different antennas. Then UWB signals received by different antennas are processed, phases of corresponding arrival signals are obtained based on the UWB signals received by different antennas, and phase differences between different antennas are obtained, to calculate phase information. The phase information may also be referred to as angle information, and the phase information shown herein may include an AOA.

Antenna switching needs to be performed in a time division manner for angle measurement on a single receive channel, and received signals of the corresponding antennas need to be processed. Therefore, there is a time interval between received signals of different antennas. In addition, angle calculation is affected by a time interval, and the time interval affects at least one of frequency offset tracking, a compensation error, and a clock jitter, reducing angle measurement precision. When the UWB signal is sent by using the PPDU format shown in FIG. 1, a short time interval (for example, a maximum time interval is 1 $\mu$s) between the plurality of signal segments included in the STS in the UWB signal imposes a high requirement on a baseband signal processing time and an analog device stabilization time, and a high requirement on a component of a switch (switch) used for antenna switching. For another example, the interval between the plurality of signal segments included in the STS is short, and consequently, a duty cycle of an impulse signal is large. Because power spectral density of FCC is fixed (which may also be understood as that total power of the UWB signal is fixed), when the duty cycle of the impulse signal is large, an average impulse density is high, resulting in low compliant impulse transmit power. In addition, a quantity of segments of the STS is fixed, that is, an accumulated length of segment signals is fixed. Therefore, a signal-to-noise ratio gain of a received signal obtained by the receive end based on accumulated energy of the signals is limited. When the UWB signal is sent based on the PPDU format shown in FIG. 1, angle measurement performance and a coverage distance are both limited.

In view of this, embodiments of this application provide a phase determining method and an apparatus, to improve signal coverage. For example, signal coverage can be increased when angle measurement precision is increased. For example, a signal-to-noise ratio of a signal received by a receive end can be further increased. The signal may be understood as a radio frame shown below, or a first frame, a second frame, a third frame, or the like shown below. Because a transmit end may send a signal in a form of a UWB impulse, the signal may also be referred to as a UWB signal.

The following describes, in detail, terms related in embodiments of this application.

1. Receive channel and transmit channel

The receive channel and the transmit channel may each be a radio frequency front-end (radio frequency front-end, RFFE) connected to an antenna. The radio frequency front-end is mainly configured to receive and send a signal at different frequencies. For example, the radio frequency front-end may include a radio frequency power amplifier (power amplifier, PA), a radio frequency low noise amplifier (low noise amplifier, LNA), a radio frequency switch (switch), a filter, a duplexer, and the like.

For example, main components of the receive channel and the transmit channel may include a baseband processing circuit (baseband integrated circuit, BBIC), a radio frequency integrated circuit (radio frequency integrated circuit, RFIC), and a radio frequency front-end. The baseband integrated circuit may be configured to complete signal processing related to a communication standard, and is configured to perform functions such as compression/decompression, encoding/decoding, and modulation/demodulation of a digital signal. A main function of the radio frequency integrated circuit is to perform up-conversion and down-conversion. Main functions of the BBIC, the RFIC, and the RFFE are not described in detail in embodiments of this application.

For example, for the receive channel, a main function of the radio frequency integrated circuit is to perform down-conversion. For the transmit channel, a main function of the radio frequency integrated circuit may be to perform up-conversion. For example, for the receive channel, a main function of the baseband processing circuit may be decompression, decoding, demodulation, and the like. For example, for the transmit channel, a main function of the baseband processing circuit may be compression, encoding, modulation, and the like. Differences between the receive channel and the transmit channel are not listed one by one in embodiments of this application.

2. Angle of arrival (angle of arrival, AOA) and angle of departure (angle of departure, AOD)

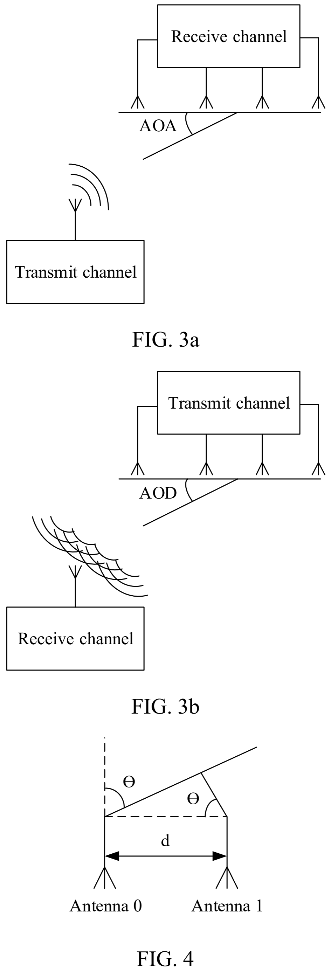

As one of common positioning technologies, in an AOA or AOD technology, a direction or an angle of a target may be measured by using a wireless communication system, to implement positioning of the target, and the like. As shown in FIG. 3a, the AOA technology is based on a receiver and a transmitter. For example, a multi-antenna device is used as the receiver, and another single-antenna device is used as the transmitter. Because a distance between a transmit antenna and each receive antenna is different, a transmitted signal has a receive time difference on each receive antenna. The angle of arrival, that is, AOA, can be estimated based on a calculated phase difference. As shown in FIG. 3b, for the AOD, a basic principle of measuring a phase difference is the same, but device roles are exchanged. In the AOD, a transmitter may use a plurality of antennas, and a receiver may use a single antenna to receive a signal. Because a distance between a receive antenna and each transmit antenna is different, a received signal has a time difference on each transmit antenna. A transmit direction of the signal, that is, the AOD, can be estimated by calculating a phase difference based on the time difference.

FIG. 4 is used as an example to describe a specific manner of measuring the AOA. For example, an expression of a transmitted signal is $s(t)e^{j2\pi ft}$, a signal received by an antenna 0 at each moment may be $b_0(t) =$

$s(t - \tau_0)e^{j2\pi f(t-\tau 0)}$, and a signal received by an antenna 1 at each moment may be $b_1(t) = s(t - \tau_1)e^{j2\pi f(t-\tau 1)}$. Therefore, the signal received by the antenna 0 is $b_0 = \int b_0(r)e^{-j2\pi ft}dt = e^{-j2\pi f\tau 0}$, and the signal received by the antenna 1 is $b_1 = \int b_1(r)e^{-j2\pi ft}dt = e^{-j2\pi f\tau 1}$.

$$b_0^* b_1 = e^{j2\pi f(\tau_0 - \tau_1)} = e^{j2\pi \frac{dsin(\theta)}{\lambda}}$$ , phase

$$\psi = \frac{2\pi d sin(\theta)}{\lambda}$$ , and angle of arrival

$$\theta = asin\left(\frac{\lambda\psi}{2\pi d}\right)$$ . $f$ represents a carrier frequency, $\tau_0$ represents a latency between transmission and reception of a signal received by the antenna 0, $\tau_1$ represents a latency between transmission and reception of the signal received by the antenna 1, $\lambda$ represents a signal wavelength, and d represents a distance between antennas (for example, between the antenna 0 and the antenna 1).

The foregoing AOA calculation manner is merely an example. A specific calculation manner of the AOA or the AOD is not limited in embodiments of this application. Generally, the receive end may obtain phase information, such as the AOA or the AOD, based on phase differences corresponding to different antennas.

3. Frame format

The following describes different frame formats in embodiments of this application by using different implementations.

Implementation 1

In an example, a radio frame may include a channel impulse response (channel impulse response, CIR) training sequence (CIR training sequence, CTS). For example, specific sequence content of the CTS may be defined in a standard. The specific sequence content of the CST is not limited in embodiments of this application. For example, the CTS may be a sequence including -1, 0, and +1.

The CTS may include at least two segment groups, and each segment group includes at least two segments. A time interval between adjacent segments in each segment group is a first time interval, and a time interval between adjacent segment groups is a second time interval. The second time interval is greater than the first time interval. That the radio frame includes the CTS may also be understood as that the radio frame includes a CTS field, and the CTS field is determined based on the CTS. The CTS may be understood as a sequence including at least two elements. A length of the sequence or specific content of the sequence is not limited in embodiments of this application. For example, after generating the CTS at a physical layer of the transmit end, the transmit end inserts a time interval into a corresponding location of the CTS based on the first time interval and the second time interval. A length of one segment is not limited in embodiments of this application. For example, the length of one segment may be on a magnitude order of $\mu s$, for example, 10 $\mu s$ or 100 $\mu s$. It may be understood that no signal is sent in the first time interval and the second time interval. The first time interval may also be briefly referred to as a first interval, and the second time interval may also be briefly referred to as a second interval. Because the first time interval is less than the second time interval, the first time interval may also be referred to as a short interval, and the second time interval may also be referred to as a long interval in terms of the time length. The first time interval may be a time at a $\mu s$ level, for example, in a range of 0 $\mu s$ to 10 $\mu s$, or at a level of several $\mu s$. The second time interval may be a time at a $\mu s$ level (or referred to as a magnitude order of $\mu s$) or ms level (or referred to as a magnitude order of ms). For example, the second time interval may be in a range of 10 $\mu s$ to 100 $\mu s$, or in a range of 10 $\mu s$ to hundreds of $\mu s$, or in a range of 10 $\mu s$ to 10 ms, or at a level of tens/hundreds of $\mu s$ to ms. Specific values of the first time interval and the second time interval are not limited in embodiments of this application.

For example, the first time interval may be a time interval between an end time of a previous segment and a start time of a next segment in adjacent segments. The second time interval may be a time interval between an end time of a previous segment group and a start time of a next segment group in adjacent segment groups. Certainly, in addition to the start time and the end time, the first time interval may alternatively be measured by a time interval between a start time of a previous segment and a start time of a next segment in adjacent segments, or may be measured by a time interval between an end time of a previous segment and an end time of a next segment in adjacent segments. The second time interval is deduced by analogy, and details are not described herein again.

For example, a quantity of segments included in each segment group may be determined based on a quantity of transmit antennas in the transmit end that are used for sending the radio frame, or may be determined based on a quantity of receive antennas in the receive end that are used for receiving the radio frame. For descriptions of the quantity of segments, refer to the following descriptions of the AOA and the AOD. Details are not described herein.

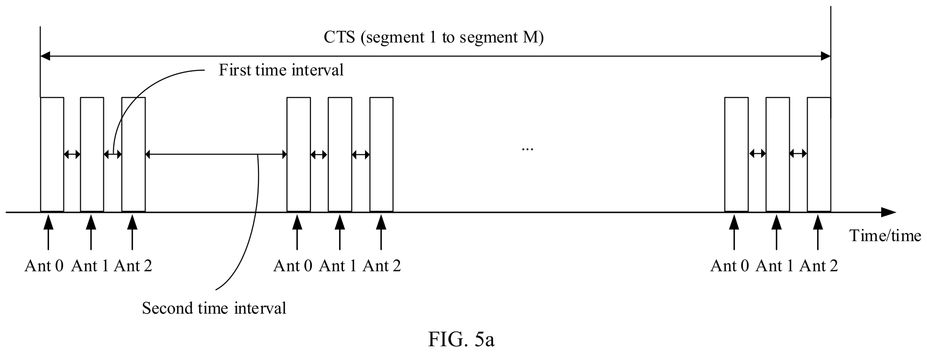

FIG. 5a is a diagram of a format of a radio frame according to an embodiment of this application. As shown in FIG. 5a, the radio frame may include a CTS, the CTS includes at least two segment groups, and the at least two segment groups included in the CTS may include M segments in total. M may be an integer greater than or equal to 4. In FIG. 5a, a segment group is omitted by the ellipsis. FIG. 5a is shown by using three antennas in the receive end that are used for receiving the radio frame as an example, or is shown by using three antennas in the transmit end that are used for sending the radio frame as an example. It may also be understood that FIG. 5a is shown by using an example in which one receive channel that is in the receive end and that is used for receiving the radio frame corresponds to three antennas, or is shown by using an example in which one transmit channel that is in the transmit end and that is used for sending the radio frame corresponds to three antennas. An antenna 0 (Ant 0), an antenna 1 (Ant 1), and an antenna 2 (Ant 2) shown in FIG. 5a are merely examples.

It may be understood that the segment shown in embodiments of this application may also be referred to as a CTS segment, a segment, a fragment, or the like. A specific name of the segment is not limited in embodiments of this application.

A time interval between adjacent segments in each segment group may be used for antenna switching when the transmit end sends the radio frame, or may be used for antenna switching when the receive end receives the radio frame. To be specific, the first time interval may correspond to a time interval for antenna switching. The first time interval may be used to reduce a frequency offset estimation error and alleviate impact of a clock jitter on measurement precision, thereby improving measurement precision. The time interval (that is, the second time interval) between adjacent segment groups may be used to reduce an average impulse density (that is, reduce the average impulse density of the entire frame on the whole), to increase impulse transmit power, increase a coverage distance of the radio frame, and implement high-precision measurement of phase information.

Intervals between segments of the CTS in the radio frame are configured in an unequal interval manner. For example, the first time interval is less than the second time interval. This not only can improve measurement precision, but also can increase a coverage distance of the radio frame.

It may be understood that an antenna switching time also affects selection of a component (for example, a switch used for antenna switching). In embodiments of this application, a requirement on the component may be further reduced by setting the first time interval.

Implementation 2

In another example, a radio frame may include a synchronization field and a CTS, the CTS may include at least two segment groups, and each segment group includes at least two segments. For descriptions of the CTS, refer to the descriptions of Implementation 1. Details are not described herein again.

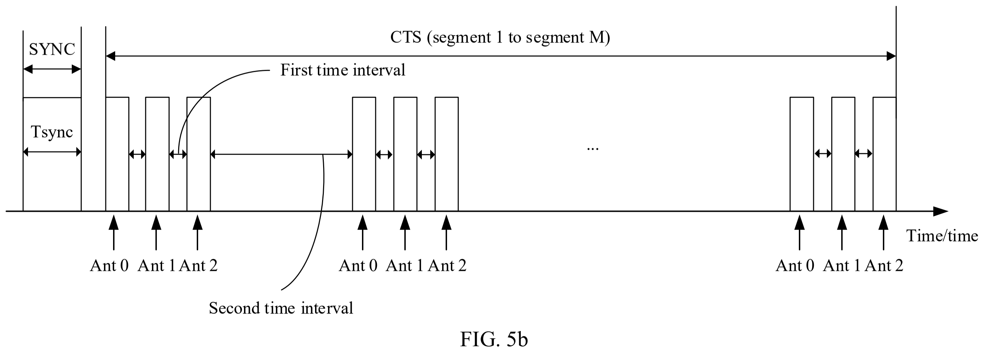

FIG. 5b is a diagram of a format of a radio frame according to an embodiment of this application. As shown in FIG. 5b, the radio frame may include a synchronization field and a CTS, the CTS includes at least two segment groups, and the at least two segment groups included in the CTS may include M segments in total. Tsync represents a time length of a SYNC part of the radio frame, and is used to send the SYNC field. A time interval between an end time of the synchronization field and a start time of the CTS is not limited in embodiments of this application. For example, the time interval between the end time of the synchronization field and the start time of the CTS may be a second time interval. For other descriptions of FIG. 5b, refer to Implementation 1, FIG. 5a, or the like. Details are not described herein again.

It may be understood that, for Implementation 1, because the radio frame may not include the synchronization field, the radio frame shown in Implementation 1 may also be referred to as a CTS-only frame format. For Implementation 2, because the radio frame includes both the synchronization field and the CTS, the radio frame shown in Implementation 2 may also be referred to as SYNC+CTS.

Implementation 3

In still another example, a radio frame may include a synchronization field and a CTS, the CTS includes M segments, and time intervals between two adjacent segments are the same. For example, for three consecutive adjacent segments, a time interval between the first segment and the second segment is the same as a time interval between the second segment and the third segment.

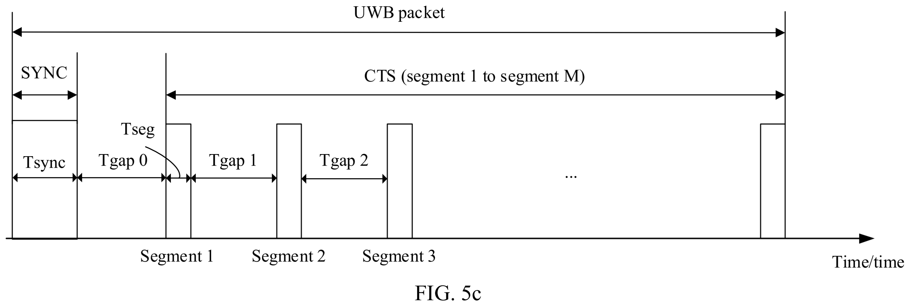

FIG. 5c is a diagram of a format of a radio frame according to an embodiment of this application. As shown in FIG. 5c, the radio frame includes a synchronization field and a CTS, and the CTS includes M segments. Tsync represents a time length of a SYNC part of the radio frame, and is used to send the SYNC field. Tseg represents a time length of each segment of the CTS of the radio frame, and is used to send one segment of the CTS. Tgap[0:M-1] represents a time length of an interval between segments, and no signal is sent. In FIG. 5c, a segment is omitted by the ellipsis. It may be understood that a start sequence number of the segment and a start sequence number of the time interval are not limited in embodiments of this application.

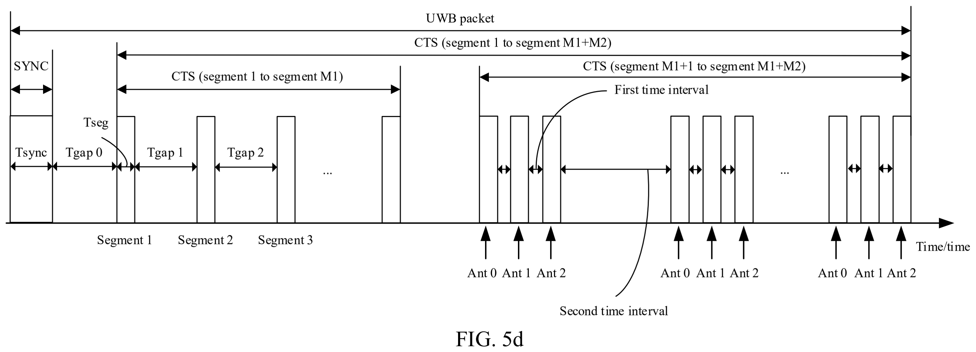

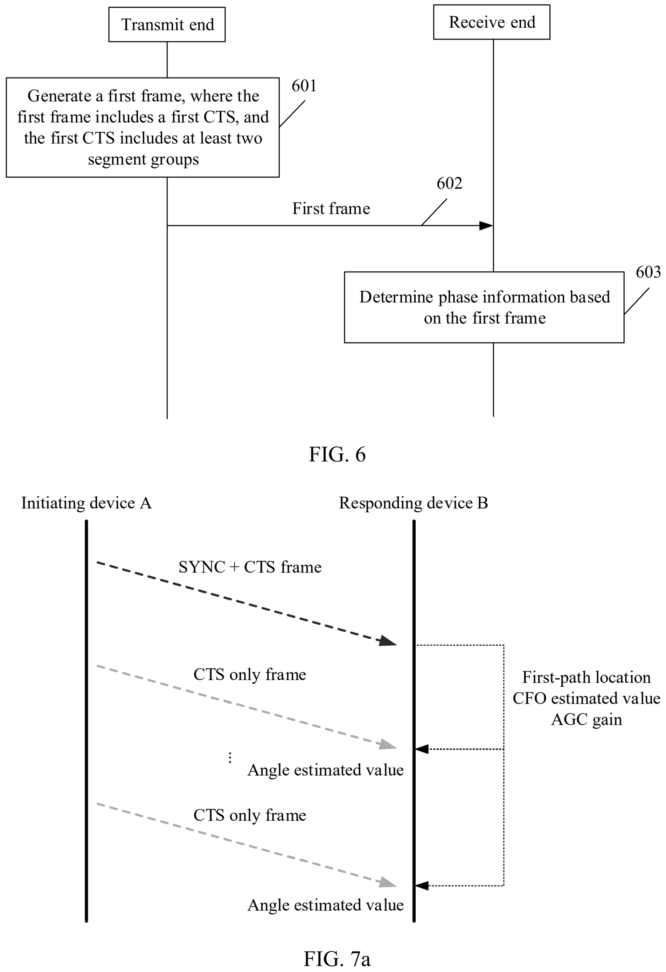

As compared with the radio frames shown in FIG. 5a and FIG. 5b, a CTS format in the radio frame shown in FIG. 5c (or FIG. 5d) is different from a CTS format in the radio frame shown in FIG. 5a (or FIG. 5b). Therefore, when the two types of CTSs shown in FIG. 5a (or FIG. 5b) and FIG. 5c need to be distinguished from each other, the CTS shown in FIG. 5a may also be referred to as a first CTS, and the CTS shown in FIG. 5c may also be referred to as a second CTS. When the two types of CTSs shown in FIG. 5a (or FIG. 5b) and FIG. 5d need to be distinguished from each other, the CTS shown in FIG. 5a may also be referred to as a first CTS, and the CTS shown in FIG. 5d may also be referred to as a second CTS. Distinguishing between CTSs by using different CTS formats, as described above, is merely an example, and the first CTS and the second CTS obtained through distinguishing should not be understood as a limitation on embodiments of this application. For example, CTSs may alternatively be distinguished based on different time at which the transmit end sends radio frames. For example, the transmit end may send the radio frames at different time. Therefore, CTSs in the radio frames sent at different time may also be distinguished as the first CTS and the second CTS. Manners of distinguishing between the first CTS and the second CTS are not listed one by one. By analogy, radio frames may also be distinguished, and details are not described herein again. Descriptions of "first" and "second" herein are also applicable to descriptions of a first CTS, a second CTS, a first frame, a second frame, and a third frame that are shown in FIG. 6 below.

Implementation 4

In yet another example, a radio frame may include a CTS, the CTS may include at least two segment groups, the at least two segment groups include a first segment group, a time interval between adjacent segments in the first segment group is a first time interval, and a time interval between adjacent first segment groups is a second time interval. For example, all segment groups in the at least two segment groups may be first segment groups. For example, the CTS may further include a second segment group, and a time interval between adjacent segments in the second segment group is a second time interval or a third time interval. A time interval between the second segment group and the first segment group may be the second time interval or the third time interval. For example, the time interval between adjacent segments in the second segment group and a time interval between an end time of the second segment group and a start time of the first segment group may be both the second time interval. A magnitude relationship between the second time interval and the third time interval is not limited in embodiments of this application.

For example, the CTS may include at least two first segment groups and one second segment group. A specific quantity of first segment groups and a specific quantity of second segment groups included in the CTS are not limited in embodiments of this application. The quantity of first segment groups and the quantity of second segment groups may be configured by the transmit end, or may be negotiated by the transmit end and the receive end, or the like. For related descriptions of the first segment group, refer to related descriptions of Implementation 1 and Implementation 2. For related descriptions of the second segment group, refer to related descriptions of Implementation 3. Related descriptions of the first segment group herein are also applicable to the foregoing Implementation 1 and Implementation 2. Related descriptions of the second segment group herein are also applicable to the foregoing Implementation 3.

For example, the radio frame may further include a synchronization field.

FIG. 5d is a diagram of a format of a radio frame according to an embodiment of this application. As shown in FIG. 5d, the radio frame includes first segment groups (a quantity of segment groups shown in FIG. 5d except those shown by the ellipsis is 3) and a second segment group. The radio frame may further include a synchronization field. It may be understood that FIG. 5d shows that the CTS includes M1+M2 segments, first M1 segments in the M1+M2 segments are included in the second segment group, and an (M1+1)$^{th}$ segment to an (M1+M2)$^{th}$ segment in the M1+M2 segments are divided into at least two first segment groups. For related descriptions of the first segment group and the second segment group, refer to Implementation 1 and Implementation 2. Details are not described herein again. M1 and M2 are both positive integers. For example, M1 may be an integer greater than or equal to 1. For another example, M2 may be an integer greater than or equal to 4.

Implementation 5

In still yet another example, the radio frame may include a synchronization field. In other words, the radio frame in embodiments of this application may include only the synchronization field, for example, a frame format referred to as SYNC-only.

The radio frames shown in the foregoing Implementation 1 to Implementation 4 may be understood as that a CTS in a radio frame is divided into a plurality of segments (segments) (seg for short), and an interval (gap) is inserted between the segments, so that a duty cycle of impulse signal transmission can be effectively reduced. When a requirement on power spectral density of FCC is ensured, transmit power of a single segment can be effectively increased by reducing the duty cycle of impulse signal transmission, so that coverage of the radio frame can be improved. In addition, by using the foregoing frame format, the UWB system can also implement a positioning function of ranging and angle measurement with low complexity and low power consumption (for example, for a single receive channel or a small quantity of receive channels), or implement a sensing function. Whether the radio frame includes another field other than the synchronization field and the CTS is not limited in embodiments of this application.

In a specific implementation, the transmit end may determine, based on an actual requirement, a frame format of a radio frame to be sent by the transmit end. For example, the transmit end may determine the frame format of the radio frame based on a sensing procedure requirement, a ranging procedure requirement, or an angle measurement procedure requirement. For example, when the transmit end needs to perform channel estimation or synchronization, the transmit end may send a radio frame including a synchronization field. For another example, when the transmit end needs to perform first-path detection, the transmit end may send a radio frame including a CTS. For another example, when the transmit end needs phase information of high precision, the transmit end may send a plurality of radio frames. One radio frame in the plurality of radio frames may be shown in FIG. 5a, and another radio frame in the plurality of radio frames may be shown in FIG. 5d. Specific application scenarios of the foregoing radio frames are not listed one by one.

It may be understood that, generally, the transmit end may generate a PPDU at the physical layer, and then the PPDU may be referred to as a signal (for example, a UWB signal or a UWB packet) when being sent by using an antenna. Therefore, the radio frame in embodiments of this application may be referred to as the UWB signal or the UWB packet, or may be referred to as a PPDU for the physical layer. A specific name of the radio frame is not limited. For example, one UWB signal may include a plurality of pulses, and a quantity of pulses may be determined based on a length of the CTS of the radio frame. One rectangle shown in FIG. 5a to FIG. 5d is a segment of one CTS. A quantity of pulses in the segment is not limited in embodiments of this application.

Related descriptions of terms are also applicable to a phase determining method and a communication apparatus shown below.

The following describes, in detail, a phase determining method in embodiments of this application.

FIG. 6 is a schematic flowchart of a phase determining method according to an embodiment of this application. The method is described by using a transmit end and a receive end as an example. For descriptions of the transmit end and the receive end, refer to the foregoing descriptions. Details are not described herein again. Whether another forwarding apparatus or relay apparatus is included between the transmit end and the receive end is not limited in this embodiment of this application. As shown in FIG. 6, the method includes the following steps.

601: The transmit end generates a first frame, where the first frame includes a first CTS, and the first CTS includes at least two segment groups.

A time interval between adjacent segments in each segment group of the at least two segment groups is a first time interval. A time interval between adjacent segment groups in the at least two segment groups is a second time interval. The second time interval is greater than the first time interval. For related descriptions of the first time interval and the second time interval, refer to the descriptions of the foregoing implementation 1. Details are not described herein again.

In an example, the first frame may not include a synchronization field. In this case, for related descriptions of the first frame, refer to the foregoing Implementation 1. Details are not described herein again. When a first segment group and a second segment group are used for distinguishing, segment groups in the at least two segment groups included in the first frame may be both understood as the first segment group.

In this example, the first frame includes the at least two segment groups, so that the receive end can perform antenna switching based on a time interval between adjacent segments, to receive different segments in the segment group by using different antennas. In addition, average power spectral density can be further effectively reduced by using a time interval between adjacent segment groups, to improve coverage of the first frame.

In a possible implementation, before the transmit end sends the first frame, the method shown in FIG. 6 may further include: The transmit end sends a third frame, and correspondingly, the receive end receives the third frame. The third frame may include a synchronization field. The receive end may perform frequency offset estimation or time-frequency synchronization by receiving the third frame including the synchronization field, to ensure synchronization between the receive end and the transmit end. When the receive end and the transmit end are synchronized, phase information determined by the receive end based on the first frame is more accurate.

In another example, the first frame may include a synchronization field and the first CTS. In this case, for related descriptions of the first frame, refer to the foregoing Implementation 2. Details are not described herein again. When a first segment group and a second segment group are used for distinguishing, segment groups in the at least two segment groups included in the first frame may be both understood as the first segment group.

In this example, the first frame includes the synchronization field and the first CTS, so that the receive end can perform frequency offset estimation or time-frequency synchronization based on the synchronization field, thereby ensuring synchronization between the receive end and the transmit end, and further effectively improving coverage of the first frame.

In still another example, segment groups in the at least two segment groups included in the first frame are both the first segment group. In addition, the first frame may further include the second segment group. In this case, for related descriptions of the first frame, refer to Implementation 4. Details are not described herein again. For example, the first frame may further include a synchronization field.

In a possible implementation, before the transmit end sends the first frame, the method shown in FIG. 6 may further include: The transmit end sends a second frame, and correspondingly, the receive end receives the second frame. The second frame includes a synchronization field and a second CTS. For example, a format of the second CTS may be shown in FIG. 5c, or a format of the second CTS may be shown in FIG. 5d. For related descriptions of the second CTS, refer to the foregoing Implementation 3 and Implementation 4. Details are not described herein again.

It may be understood that the first frame, the second frame, and the third frame shown above are merely examples. In a specific implementation, the radio frame sent by the transmit end may be a combination of the foregoing different frames. For example, the transmit end may send the first frame for a plurality of times, or the transmit end may send the second frame and the first frame (or send the first frame for a plurality of times), or the transmit end may send the third frame and the first frame (or send the first frame for a plurality of times), or the transmit end may send the third frame, the second frame, the first frame, and the like. Examples are not listed one by one. When the transmit end sends the combination of the foregoing different frames, the receive end may obtain one piece of phase information each time receiving one radio frame, so that one piece of more accurate phase information can be determined based on a plurality of pieces of obtained phase information, thereby improving precision of the phase information.

For ease of distinguishing, the following is described by using the first segment group and the second segment group as an example.

602: The transmit end sends the first frame, and correspondingly, the receive end receives the first frame.

603: The receive end determines the phase information based on the first frame.

The phase information may be understood as phase-related information. For example, the phase information determined by the receive end based on the first frame may be phase information related to the positioning field, or may be phase information related to the sensing field. For example, the phase information may be an AOA or an AOD. For another example, the phase information may be a CIR. For another example, the phase information may be information that is related to a target device and that may be learned based on the CIR. The information related to the target device shown herein may include a distance of the target device, a speed of the target device, and the like. The AOA and the AOD may also be understood as information related to the target device, that is, an angle of the target device. For example, the receive end may be the target device, or may be a device other than the target device and the transmit end.

When radio frames sent by the transmit end are the combination of the foregoing different frames, the receive end may determine the phase information based on the radio frames sent by the transmit end. For example, when the transmit end sends the second frame and the first frame, the receive end may receive the second frame and the first frame, and determine the phase information based on the second frame and the first frame. For another example, when the transmit end sends the third frame, the second frame, and the first frame, the receive end may determine the phase information based on the third frame, the second frame, and the first frame. By analogy, examples are not limited one by one in this embodiment of this application.

The following is described by using the AOA and the AOD as examples.

1. AOA When the receive end determines the AOA based on the first frame, the transmit end may send the first frame by using a single antenna, and the receive end may receive the first frame by using a plurality of antennas. Certainly, the transmit end may alternatively send the first frame by using a plurality of antennas. How the transmit end sends the first frame is not limited in this embodiment of this application.

A quantity of segments in the first segment group may be determined based on at least one of a quantity of receive channels in the receive end that are used for receiving the first frame and a quantity of receive antennas in the receive end that are used for receiving the first frame. The quantity of receive channels may be understood as the quantity of receive channels used for receiving the first frame, or a quantity of receive channels that participate in a receiving processing operation on the first frame. The quantity of receive antennas may be understood as the quantity of receive antennas used for receiving the first frame, or a quantity of receive antennas that participate in a receiving operation on the first frame.

For example, the quantity of segments in the first segment group may be determined based on the quantity of receive antennas in the receive end that are used for receiving the first frame. In an example, the quantity of receive antennas used for receiving the first frame may be a quantity of receive antennas corresponding to the receive channels used for receiving the first frame. For example, there is one receive channel that is in the receive end and that is used for receiving the first frame (that is, a single receive channel), and the single receive channel corresponds to a plurality of antennas used for receiving the first frame. In this case, the quantity of segments in the first segment group may be determined based on the quantity of antennas corresponding to the single receive channel. For example, the quantity of segments in the first segment group may be equal to the quantity of antennas that correspond to the single receive channel and that are used for receiving the first frame, that is, each segment in the first segment group may correspond to one receive antenna. Using FIG. 3b as an example, when receiving the first frame, the receive end may sequentially perform antenna switching by using switches between a receive channel and a plurality of antennas, to receive segments of the first CTS in turn by using the plurality of antennas (the plurality of antennas used for receiving the first frame) corresponding to the receive channel (for example, receive one segment in one segment group in turn).

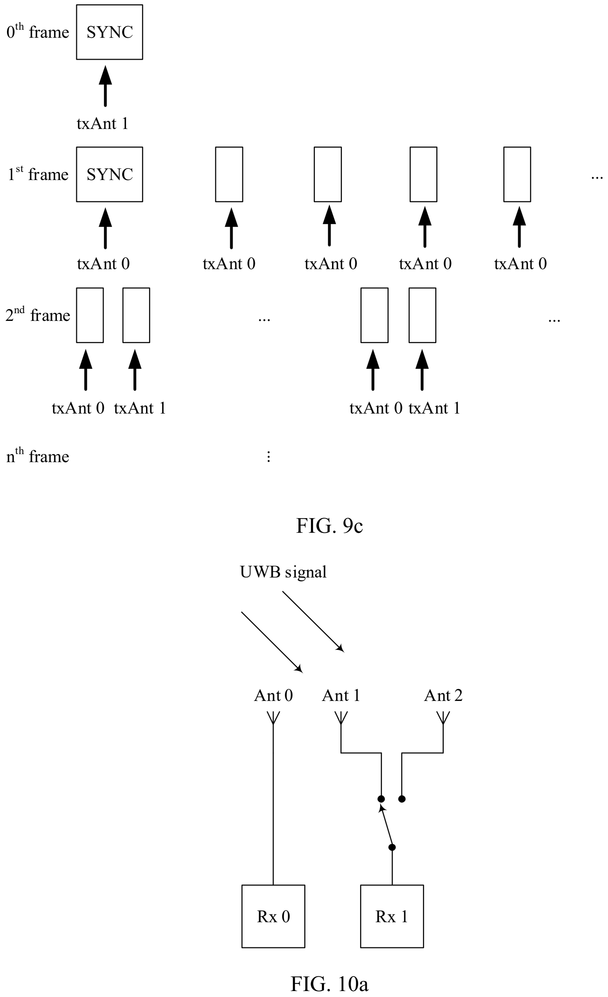

In another example, the quantity of receive antennas used for receiving the first frame may be a maximum quantity of receive antennas that correspond to a receive channel in the plurality of receive channels used for receiving the first frame. For example, there are a plurality of receive channels in the receive end that are used for receiving the first frame, and at least one receive channel in the plurality of receive channels corresponds to a plurality of antennas. In this case, the quantity of segments in the first segment group may be determined based on the maximum quantity of receive antennas corresponding to the receive channel. For example, the quantity of segments in the first segment group may be equal to the maximum quantity of receive antennas corresponding to the receive channel in the plurality of receive channels. For the receive channel corresponding to the maximum quantity of receive antennas, each segment in the first segment group may correspond to one receive antenna in the receive channel. Using FIG. 10a as an example, when receiving the first frame, the receive end may receive segments of the first CTS by using two receive channels. For example, the receive end receives the first frame by using a receive channel Rx 0, and sequentially performs antenna switching by using switches between a receive channel Rx 1 and two antennas, to receive segments of the first CTS in turn by using the two antennas corresponding to the receive channel Rx 1 (for example, receive one segment in one segment group in turn).

In this embodiment of this application, the receive end may obtain CIR estimation by performing processing (for example, processing such as coherent accumulation) on the CTS, and perform first-path detection, to obtain a first-path location. Then, a distance and an angle are determined based on the first-path location and a phase difference between first-path locations corresponding to different antennas.

2. AOD

When the receive end determines the AOD based on the first frame, the transmit end may send the first frame by using a plurality of antennas, and the receive end may receive the first frame by using a single antenna. Certainly, the receive end may alternatively receive the first frame by using a plurality of antennas. How the receive end receives the first frame is not limited in this embodiment of this application.

A quantity of segments in the first segment group may be determined based on at least one of a quantity of transmit channels in the transmit end that are used for sending the first frame and a quantity of transmit antennas in the transmit end that are used for sending the first frame. The quantity of transmit channels may be understood as the quantity of transmit channels used for sending the first frame, or a quantity of transmit channels that participate in a sending processing operation on the first frame. The quantity of transmit antennas may be understood as the quantity of transmit antennas used for sending the first frame, or a quantity of transmit antennas that participate in a sending operation on the first frame.

For example, the quantity of segments in the first segment group may be determined based on the quantity of transmit antennas in the transmit end that are used for sending the first frame. In an example, the quantity of transmit antennas used for sending the first frame may be a quantity of transmit antennas corresponding to the transmit channels used for sending the first frame. For example, there is one transmit channel that is in the transmit end and that is used for sending the first frame (that is, a single transmit channel), and the single transmit channel corresponds to a plurality of antennas used for sending the first frame. In this case, the quantity of segments in the first segment group may be determined based on the quantity of antennas corresponding to the single transmit channel. For example, the quantity of segments in the first segment group may be equal to the quantity of antennas that correspond to the single transmit channel and that are used for sending the first frame, and each segment in the first segment group may correspond to one transmit antenna. When sending the first frame, the transmit end may sequentially perform antenna switching by using switches between a transmit channel and a plurality of antennas (antennas used for sending the first frame), to send segments of the first CTS in turn by using the plurality of antennas corresponding to the transmit channel.

In another example, the quantity of transmit antennas used for sending the first frame may be a maximum quantity of transmit antennas that correspond to a transmit channel in the plurality of transmit channels used for sending the first frame. For example, there are a plurality of transmit channels in the transmit end that are used for sending the first frame, and at least one transmit channel in the plurality of transmit channels corresponds to a plurality of antennas. In this case, the quantity of segments in the first segment group may be determined based on the maximum quantity of transmit antennas corresponding to the transmit channel. For example, the quantity of segments in the first segment group may be equal to the maximum quantity of transmit antennas corresponding to the transmit channel in the plurality of transmit channels. For the transmit channel corresponding to the maximum quantity of transmit antennas, each segment in the first segment group may correspond to one transmit antenna in the transmit channel. When sending the first frame, the transmit end may send segments of the first CTS by using at least two transmit channels (for example, a transmit channel Tx 0 and a transmit channel Tx 1). For example, the transmit end sends the first frame by using the transmit channel Tx 0, and sequentially performs antenna switching by using switches between the transmit channel Tx 1 and two antennas, to send segments of the first CTS in turn by using the two antennas corresponding to the transmit channel Tx 1 (for example, send one segment in one segment group in turn).

It may be understood that a basic principle of measuring a phase difference for the AOD is the same as a basic principle of measuring a phase difference for the AOA, and a difference lies in that roles of devices that perform antenna switching are exchanged (for example, for the AOD, the transmit end performs multi-antenna switching, and transmits different CTS segments in turn; and for the AOA, the receive end performs multi-antenna switching, and receives different CTS segments in turn). For ease of brevity, the following describes, in detail with reference to Example 1 to Example 6, a manner of determining the AOA, and a manner of determining the AOD is deduced by analogy.

In this embodiment of this application, an interval between segments and an interval between segment groups of a CTS in a radio frame are configured in an unequal interval manner. In this way, it can be ensured that the transmit end or the receive end has sufficient time to perform antenna switching, to reduce a frequency offset estimation error, alleviate impact of a clock jitter on measurement precision, and improve measurement precision. In addition, average impulse density can be effectively reduced by setting the time interval between the segment groups, to improve coverage of the radio frame. Therefore, coverage of the radio frame is further increased when precision of the phase information is increased.

As compared with the radio frame shown in FIG. 1, the time interval between the CTS segments in the radio frame provided in this embodiment of this application may be autonomously configured. Because the time interval affects at least one of frequency offset tracking, a compensation error, and a clock jitter, the foregoing factors may be considered when the time interval is autonomously configured, to improve precision of angle measurement (or ranging or the like). In addition, when the time interval is autonomously configured, a baseband signal processing time, an analog device stabilization time, a requirement on a component of a switch (switch) used for antenna switching, and the like may be further considered, to ensure system stability. The quantity of the CTS segments in the radio frame provided in this embodiment of this application may also be autonomously configured. Therefore, the receive end may further obtain accumulated energy based on the quantity of the CTS segments, thereby improving a signal-to-noise ratio. The time interval between the segment groups in the radio frame provided in this embodiment of this application is different from the time interval between the segments. For example, the time interval between the segment groups is greater than the time interval between the segments, so that a duty cycle of an impulse signal is reduced. When the power spectral density of FCC is fixed, the average impulse density can be effectively reduced, and compliant impulse transmit power can be increased. When transmit power of an impulse increases, coverage of the impulse increases, so that coverage of the radio frame is effectively improved.

Based on the method provided in this embodiment of this application, requirements on angle measurement precision and coverage can be balanced, so that coverage of the radio frame can be further improved when measurement precision is increased. The following describes, with reference to specific examples, the method provided in this embodiment of this application.

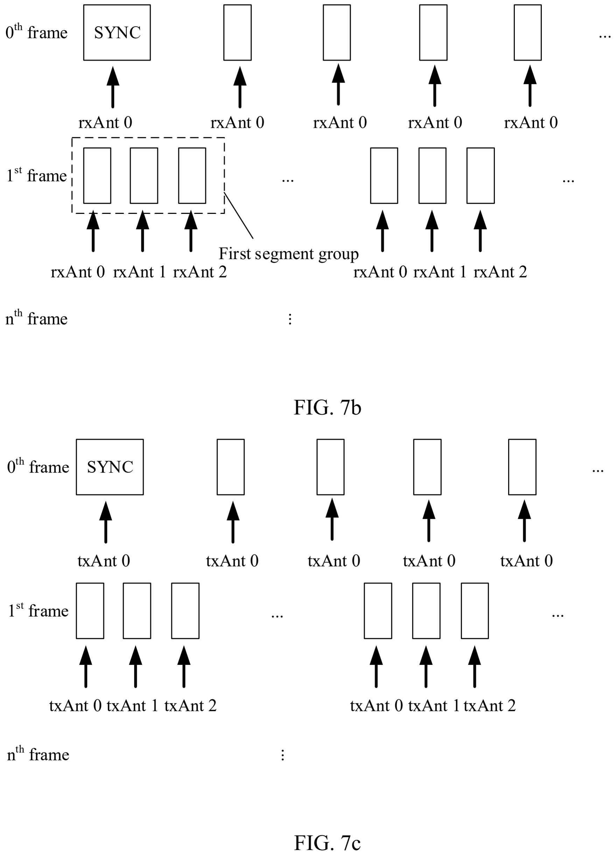

In FIG. 7a, FIG. 8a, FIG. 9a, FIG. 11a, FIG. 12a, and FIG. 13a below, SYNC+CTS frames may be understood as radio frames including a synchronization field and a CTS, and CTS only frames may be understood as radio frames including a CTS. In FIG. 7b, FIG. 7c, FIG. 8b, FIG. 8c, FIG. 9b, FIG. 11b, FIG. 12b, and FIG. 13b, except the rectangle represented by the synchronization field, each matrix in the foregoing figures represents one segment. In the following, an initiating device A may be understood as the transmit end shown above, and a responding device B may be understood as the receive end shown above. A quantity of antennas corresponding to a receive channel and a quantity of antennas corresponding to a transmit channel that are shown below are merely examples, and should not be construed as a limitation on this embodiment of this application. The $0^{th}$ frame shown below represents the first radio frame sent by the initiating device A when the initiating device A initiates an angle measurement procedure. For example, the initiating device A may trigger the $0^{th}$ frame based on a service requirement, or initiate the $0^{th}$ frame based on ranging and angle measurement service requirements. A reason why the initiating device A initiates the $0^{th}$ frame is not limited in this embodiment of this application.

Generally, before the initiating device A sends the $0^{th}$ frame, the initiating device A and the responding device B may negotiate one or more pieces of information of the first time interval, the second time interval, a third time interval, a length of a segment, a quantity of segment groups included in the CTS in the radio frame, a quantity of first segment groups, and a length of the second segment group. By negotiating the foregoing information, the initiating device A can effectively learn a format of the radio frame that the initiating device A needs to send. Certainly, the foregoing information may alternatively be defined by a protocol, or may be defined by the initiating device A. This is not limited in this embodiment of this application. Related descriptions of the negotiation information herein are also applicable to the foregoing method shown in FIG. 6.

Example 1

FIG. 7a is a diagram of a scenario of a phase determining method according to an embodiment of this application. FIG. 7b is a diagram of receiving a frame format corresponding to FIG. 7a. Frames shown in FIG. 7b are shown by using a receive perspective of the responding device B as an example. That is, each antenna shown in FIG. 7b is a receive antenna in the responding device B. As shown in FIG. 7a, the phase determining method may include the following steps.

1. The initiating device A sends the $0^{th}$ frame to the responding device B. The responding device B receives the $0^{th}$ frame by using a single antenna, and performs automatic gain control (automatic gain control, AGC) adjustment based on the $0^{th}$ frame, to obtain an AGC gain. In addition, a frequency offset such as a carrier frequency offset (carrier frequency offset, CFO), between the initiating device A and the responding device B is estimated, to obtain a CFO estimated value. In addition, the responding device B may further detect a first-path location.

The $0^{th}$ frame may be the radio frame shown in the foregoing Implementation 2, or the radio frame shown in the foregoing Implementation 3. FIG. 7b is shown by using the radio frame shown in the foregoing Implementation 3 as an example. Because the responding device B may obtain the first-path location by using the $0^{th}$ frame, the $0^{th}$ frame may also be understood as a ranging frame.

2. The initiating device A sends the $1^{st}$ frame to the responding device B. The responding device B receives, in turn, the segments of the CTS through multi-antenna switching, and performs AGC gain (AGC gain) configuration, CFO compensation, sampling clock offset (sampling clock offset, SCO) compensation, and the like based on the information obtained based on the $0^{th}$ frame. The responding device B may further perform CIR estimation and phase difference calculation on CTS segments corresponding to different antennas within a small range (for example, a range set for more accurately determining a first-path location) based on the first-path location, to obtain an angle measurement value (an angle estimated value shown in FIG. 7b), for example, an AOA.

The information obtained based on the $0^{th}$ frame may include the first-path location, the AGC gain, the CFO estimated value, and the like. For a receive antenna 0 (rxAnt 0 shown in FIG. 7b), a receive antenna 1, and a receive antenna 2, each antenna corresponds to one first-path location. Therefore, a phase difference may be estimated based on the first-path location of each antenna, and the AOA may be obtained based on the phase difference. Because the responding device B may calculate an angle by using the $1^{st}$ frame, the $1^{st}$ frame may also be understood as an angle measurement frame.

3. When continuous angle measurement is required, the initiating device A sends an $n^{th}$ frame to the responding device B. For a manner in which the responding device B receives the $n^{th}$ frame and a processing manner, refer to the foregoing step 2.

n may be an integer greater than 1. The $n^{th}$ frame may also be understood as an angle measurement frame. The $0^{th}$ frame may be understood as a SYNC+CTS frame (the SYNC+CTS frame shown in FIG. 7a), and the $1^{st}$ frame to the $n^{th}$ frame may all be understood as CTS only frames (the CTS only frame shown in FIG. 7a).

For example, CTS configurations in the $0^{th}$

frame and the 1st frame (or any frame in the 1st frame to the nth frame) may be different. To be specific, a time interval between adjacent segments in the CTS in the 0th frame may be the same, and a time interval between adjacent segment groups in the CTS in the 1st frame is different from a time interval between adjacent segments. Formats of the 1st frame to the nth frame may be the same. For example, formats of CTSs in the 1st frame to the nth frame may be shown in FIG. 5a. Certainly, formats of the 1st frame to the nth frame may alternatively be different. For example, a format of the 1st frame may be shown in FIG. 5a, and a format of the 2nd frame may be shown in FIG. 5b, or the format of the 2nd frame may be shown in FIG. 5d. Details are not described herein again.

It may be understood that a continuous angle measurement request may be initiated by the initiating device A, or may be initiated by the responding device B. If the initiating device A requires continuous angle measurement, the initiating device A may further send the nth frame to the responding device B. For another example, if the responding device B requires continuous angle measurement, the responding device B may send the continuous angle measurement request to the initiating device A, so that the initiating device A sends the nth frame to the responding device B. This description is also applicable to the following Example 2 to Example 6.

4. If continuous angle measurement is performed, the responding device B may perform upper-layer statistical optimization based on a plurality of angle measurement results to obtain a more accurate angle value. For example, the responding device B may estimate an average value of AOAs based on results of continuous angle measurement, to obtain a more accurate AOA, thereby improving precision of the determined AOA.

Example 1 is shown by using an example in which the responding device B uses three antennas corresponding to a single receive channel. FIG. 7b is shown by using an angle at which the responding device B receives a radio frame as an example. When the AOD is measured, a measurement principle of the AOD is similar to that of the AOD, and a difference lies in that, for the AOD, the transmit end performs multi-antenna switching and transmits different CTS segments in turn; and the receive end receives the radio frame by using a single antenna, and then the receive end processes the CTS segments corresponding to different antennas in a time division manner, for example, performs CIR calculation, and determines a phase difference between different antennas based on first-path locations of corresponding antennas, thereby calculating an angle, namely, the AOD, based on the phase difference. FIG. 7c is shown by using an angle at which the initiating device A sends a radio frame as an example. As shown in FIG. 7c, when the AOD is measured, the transmit end may send the 0th frame by using a transmit antenna 0 (txAnt 0 shown in FIG. 7c) corresponding to a single transmit channel, and switch, in turn, antennas corresponding to the single transmit channel, such as the transmit antenna 0 (txAnt 0 shown in FIG. 7c), a transmit antenna 1 (txAnt 1 shown in FIG. 7c), and a transmit antenna 2 (txAnt 2). Different CTS segments in the first segment group are sent by using different transmit antennas. The receive end may receive the 0th frame, the 1st frame, and the like by using a single antenna, and then determine the AOD based on these frames. For a manner in which the responding device B determines the AOD, adaptively refer to the foregoing manner in which the responding device B determines the AOA. Details are not described herein again.

Example 2

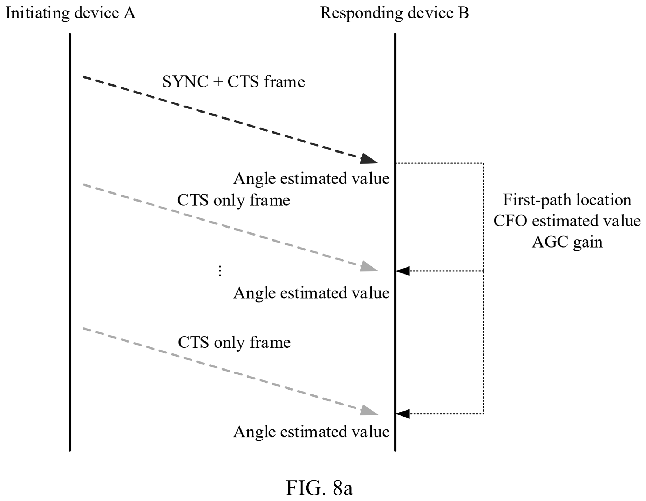

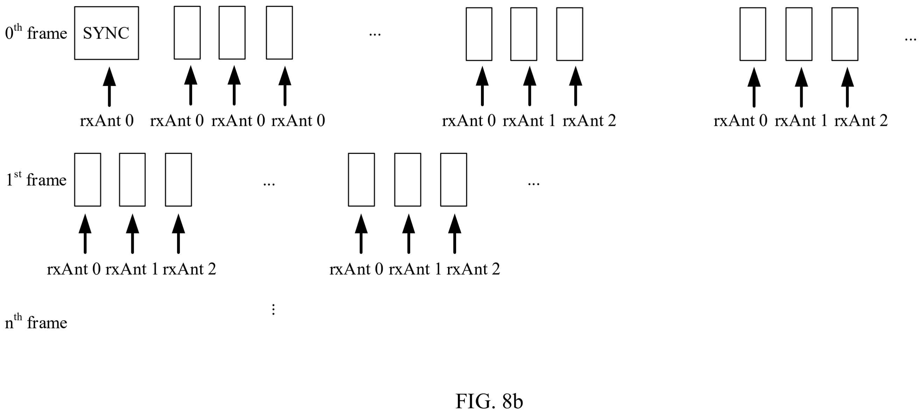

FIG. 8a is a diagram of a scenario of a phase determining method according to an embodiment of this application. FIG. 8b is a diagram of receiving a frame format corresponding to FIG. 8a. Frames shown in FIG. 8b are shown by using a receive perspective of the responding device B as an example. That is, each antenna shown in FIG. 8b is a receive antenna in the responding device B. As shown in FIG. 8a, the phase determining method may include the following steps.

1. The initiating device A sends the 0th frame to the responding device B. The 0th frame may be a long frame, for example, include a synchronization field and a CTS, where the CTS may include a first segment group and a second segment group. For example, the 0th frame may also be referred to as a ranging and angle measurement frame. The responding device B uses a single antenna for receiving the SYNC and the first half part of the CTS, and completes AGC adjustment, frequency offset CFO estimation, and first-path location detection. In addition, the responding device B receives segments of the CTS through multi-antenna switching in the second half part of the CTS, and performs CIR estimation and phase difference calculation on CTS segments corresponding to different antennas within a small range based on the first-path location, to obtain an angle measurement value.

For example, the first half part of the CTS may be a second segment group included in the CTS, and the second half part of the CTS may be at least two first segment groups included in the CTS. A length of the first segment group and a length of the second segment group are not limited in this embodiment of this application. For example, the length of the second segment group may be the same as a total length of the first segment groups, or the length of the second segment group may be less than the total length of the first segment groups.

2. When continuous angle measurement is required, the initiating device A sends an nth frame to the responding device B. The responding device B receives, in turn, the segments of the CTS through multi-antenna switching, and performs AGC gain configuration, CFO compensation, SCO compensation, and the like based on the information obtained based on the $0^{th}$ frame. The responding device B may further perform CIR estimation and phase difference calculation on CTS segments corresponding to different antennas within a small range based on the first-path location, to obtain an angle measurement value, for example, an AOA.

n may be an integer greater than or equal to 1. For related descriptions of the $n^{th}$ frame, refer to the foregoing Implementation 1.

3. If continuous angle measurement is performed, upper-layer statistical optimization is performed based on a plurality of angle measurement results to obtain a more accurate angle value. For specific descriptions of step 3, refer to step 4 in the foregoing Example 1. Details are not described herein again.

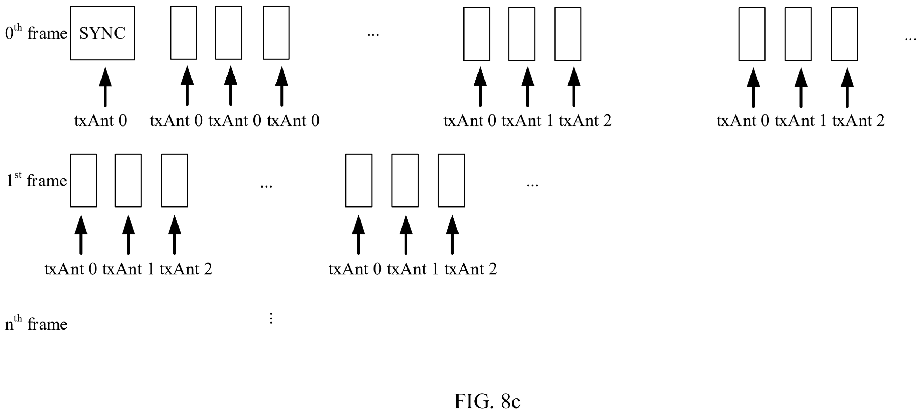

Example 2 is shown by using an example in which the responding device B uses three antennas corresponding to a single receive channel. FIG. 8b is shown by using an angle at which the responding device B receives a radio frame as an example. FIG. 8c is shown by using an angle at which the initiating device A sends a radio frame as an example. As shown in FIG. 8c, when the AOD is measured, the transmit end may send the SYNC and the first half part of the CTS of the $0^{th}$ frame by using a transmit antenna 0 (txAnt 0 shown in FIG. 8c) corresponding to a single transmit channel, and switch, in turn, antennas corresponding to the single transmit channel, such as the transmit antenna 0 (txAnt 0 shown in FIG. 8c), a transmit antenna 1 (txAnt 1 shown in FIG. 8c), and a transmit antenna 2 (txAnt 2). Different CTS segments in the first segment group in the second half part of the CTS are sent by using different transmit antennas. When continuous angle measurement is required, the transmit end may send the $n^{th}$ frame in a manner of switching transmit antennas in turn. The receive end may receive the $0^{th}$ frame, the $n^{th}$ frame, and the like by using a single antenna, and then determine the AOD based on these frames. For a manner in which the responding device B determines the AOD, adaptively refer to the foregoing manner in which the responding device B determines the AOA. Details are not described herein again.

Example 3

When power of antennas is unbalanced, optimal AGC gains received by two antennas may be inconsistent. During angle measurement, the responding device B may switch to an AGC gain of a corresponding antenna when switching a receive antenna. Therefore, for the foregoing Example 1 and Example 2, before sending the $0^{th}$ frame, the initiating device A may further send a radio frame including a synchronization field. For related descriptions of the radio frame, refer to Implementation 5. Through the radio frame, the responding device B may obtain corresponding AGC gains under different receive antennas. It may be understood that the radio frame shown in Implementation 5 may also be referred to as a SYNC short frame. For example, the following is described by using an example in which the responding device B receives a radio frame by using two antennas corresponding to a single receive channel. The following describes, by using the scenario shown in Example 1 as an example, the method provided in this embodiment of this application.

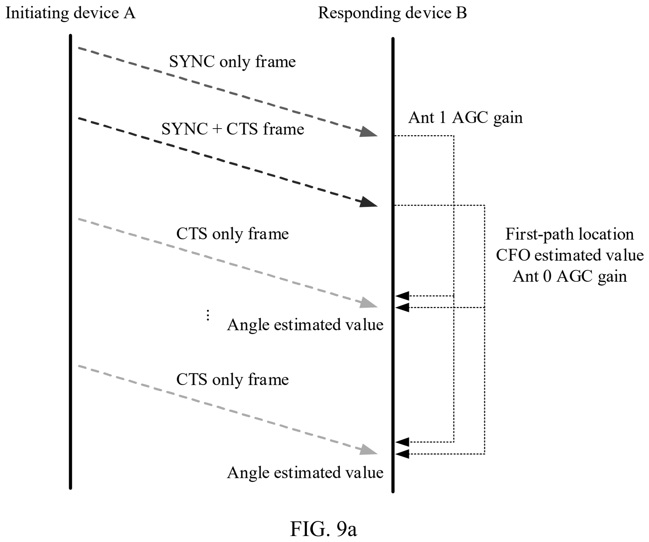

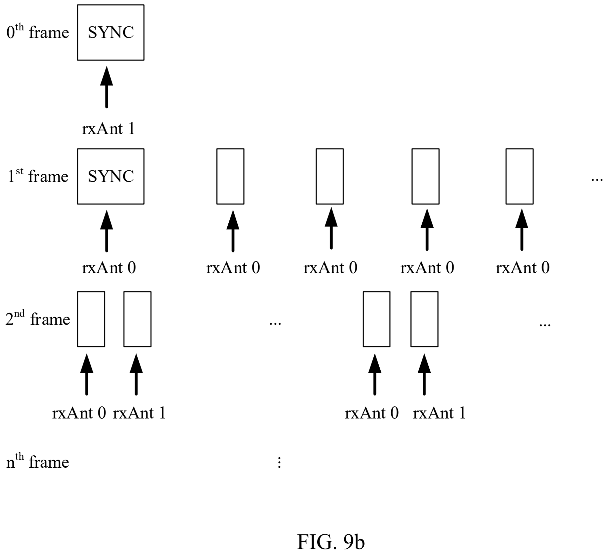

FIG. 9a is a diagram of a scenario of a phase determining method according to an embodiment of this application. FIG. 9b is a diagram of receiving a frame format corresponding to FIG. 9a. Frames shown in FIG. 9b are shown by using a receive perspective of the responding device B as an example. That is, each antenna shown in FIG. 9b is a receive antenna in the responding device B. As shown in FIG. 9a, the phase determining method may include the following steps.

1. The initiating device A sends the $0^{th}$ frame to the responding device B. The responding device B receives the $0^{th}$ frame by using a single antenna (a receive antenna 1 (rxAnt 1) shown in FIG. 9b), and performs AGC adjustment based on the $0^{th}$ frame, to obtain an AGC gain of the receive antenna 1.
The $0^{th}$ frame may also be referred to as a SYNC only frame.

2. The initiating device A sends the $1^{st}$ frame to the responding device B. The responding device B receives the $1^{st}$ frame (different from the receive antenna in the $0^{th}$ frame) by using a single antenna (different from the receive antenna in the $0^{th}$ frame, namely, a receive antenna 0 (rxAnt 0) shown in FIG. 9b), and performs AGC adjustment based on the $1^{st}$ frame, to obtain an AGC gain of the receive antenna 0. In addition, the responding device B estimates a frequency offset CFO between the initiating device A and the responding device B, and detects a first-path location.
The $1^{st}$ frame may also be referred to as a ranging frame or a SYNC+CTS frame.

3. The initiating device A sends the $2^{nd}$ frame to the responding device B. The responding device B receives, in turn, segments of the CTS through multi-antenna switching, and separately performs AGC gain configuration, CFO compensation, and SCO compensation on corresponding antennas by using AGC information obtained by receiving the $0^{th}$ frame and the $1^{st}$ frame. The responding device B may further perform CIR estimation and phase difference calculation on CTS segments corresponding to different antennas within a small range based on the first-path location, to obtain an angle measurement value, for example, an AOA.
The $2^{nd}$ frame may also be referred to as an angle measurement frame or a CTS only frame.

4. When continuous angle measurement is required, the initiating device A sends an $n^{th}$ frame to the responding device B. The responding device B receives the $n^{th}$ frame. For a manner of processing the $n^{th}$ frame, refer to the foregoing step 3.

n may be an integer greater than 2.

5. If continuous angle measurement is performed, the responding device B may perform upper-layer statistical optimization based on a plurality of angle measurement results to obtain a more accurate angle value.

It may be understood that formats of the synchronization field in the $0^{th}$ frame and the synchronization field in the $1^{st}$ frame may be the same, or may be different. This is not limited in this embodiment of this application. CTS formats of the $1^{st}$ frame and the $2^{nd}$ frame may be the same, or may be different. This is not limited in this embodiment of this application. Certainly, when the initiating device A continuously sends a plurality of angle measurement frames (for example, sends the $2^{nd}$ frame, the $3^{rd}$ frame, and the like), frame formats of the angle measurement frames may be the same or may be different.

Example 3 is shown by using an example in which the responding device B uses two antennas corresponding to a single receive channel. FIG. 9b is shown by using an angle at which the responding device B receives a radio frame as an example. FIG. 9c is shown by using an angle at which the initiating device A sends a radio frame as an example. As shown in FIG. 9c, when the AOD is measured, the transmit end may send the $0^{th}$ frame by using a transmit antenna 1 (txAnt 1 shown in FIG. 9c) corresponding to a single transmit channel, send the $1^{st}$ frame by using a transmit antenna 1 (txAnt 1 shown in FIG. 9c) corresponding to the single transmit channel, and switch, in turn, antennas corresponding to the single transmit channel, such as the transmit antenna 0 (txAnt 0 shown in FIG. 9c) and the transmit antenna 1 (txAnt 1 shown in FIG. 9c). Different CTS segments in the first segment group in the $2^{nd}$ frame are sent by using different transmit antennas. When continuous angle measurement is required, the transmit end may send the $n^{th}$ frame in a manner of switching transmit antennas in turn. The receive end may receive the $0^{th}$ frame, the $1^{st}$ frame, the $2^{nd}$ frame, and the like by using a single antenna, and then determine the AOD based on these frames. For a manner in which the responding device B determines the AOD, adaptively refer to the foregoing manner in which the responding device B determines the AOA. Details are not described herein again.

In this embodiment of this application, a length of a CTS segment, a time interval between CTS segments (that is, the first time interval), and a time interval between CTS segment groups (that is, the second time interval) may all be configured, so that requirements on coverage and angle measurement precision in different application scenarios can be supported. A flexible scheduling procedure may be applicable to different ranging and angle measurement application scenarios. For example, Example 1 may be applicable to an application scenario in which a requirement on coverage is high and a refresh rate is not very high. The refresh rate is a measurement refresh rate, for example, a quantity of times of ranging completed within one second or a quantity of times of angle measurement completed within one second. Example 2 may be applicable to an application scenario in which a requirement on a refresh rate is high. Example 3 may be applicable to an application scenario in which a requirement on coverage is not very high but a requirement on AGC switching is high. The foregoing examples are relative, and the foregoing application scenarios should not be understood as a limitation on this embodiment of this application.

The foregoing Example 1 to Example 3 are shown by using an example in which the responding device B receives a radio frame by using a single receive channel, or the initiating device A sends a radio frame by using a single transmit channel. However, in a specific implementation, the responding device B may alternatively have a plurality of receive channels, but a quantity of receive channels (that is, a quantity of receive channels) is less than a quantity of receive antennas (that is, a quantity of receive antennas). It may be understood that when the quantity of receive channels is less than the quantity of receive antennas, receive channels shown in FIG. 10a may also be referred to as fewer receive channels (relative to a single receive channel).

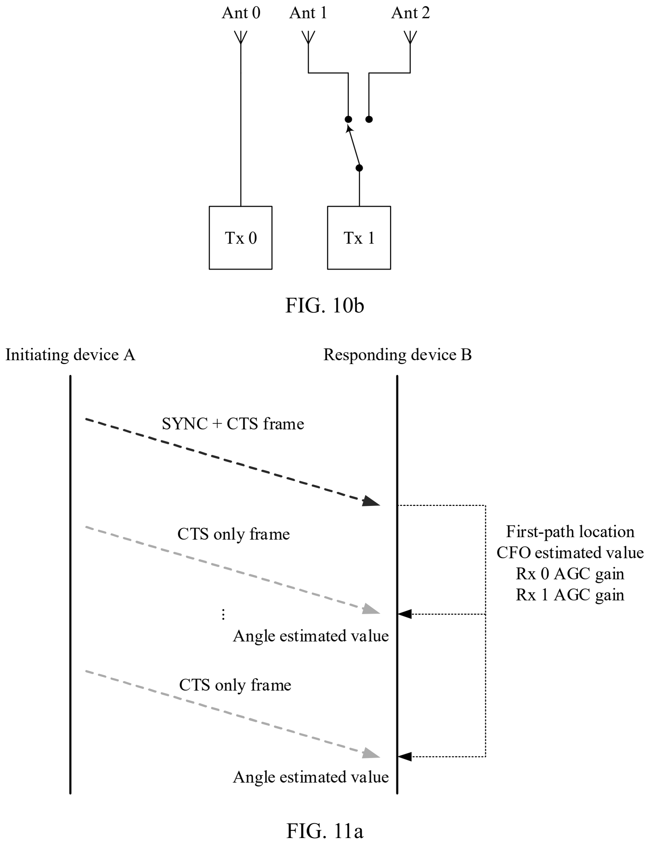

For example, as shown in FIG. 10a, the responding device B may have two receive channels (for example, Rx 0 and Rx 1 in FIG. 10a), and one receive channel corresponds to two antennas (for example, Rx 1 in FIG. 10a corresponds to Ant 1 and Ant 2). As shown in FIG. 10b, the initiating device A may have two transmit channels (for example, Tx 0 and Tx 1 in FIG. 10b), and one transmit channel may correspond to two antennas (for example, Tx 1 in FIG. 10b corresponds to Ant 1 and Ant 2). The quantity of receive channels and the quantity of receive antennas in the receive end shown in FIG. 10a are merely examples, and the quantity of transmit channels and the quantity of transmit antennas in the transmit end shown in FIG. 10b are merely examples. Because the receive antennas and the transmit antennas in the transmit end may be integrated, the transmit antennas may also be briefly referred to as antennas, and the receive antennas may also be briefly referred to as antennas.

Example 4

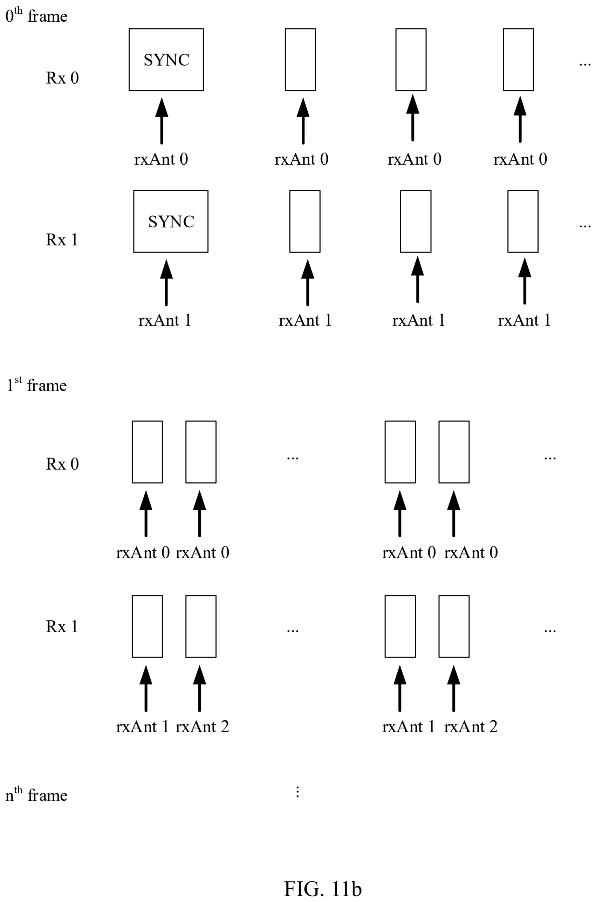

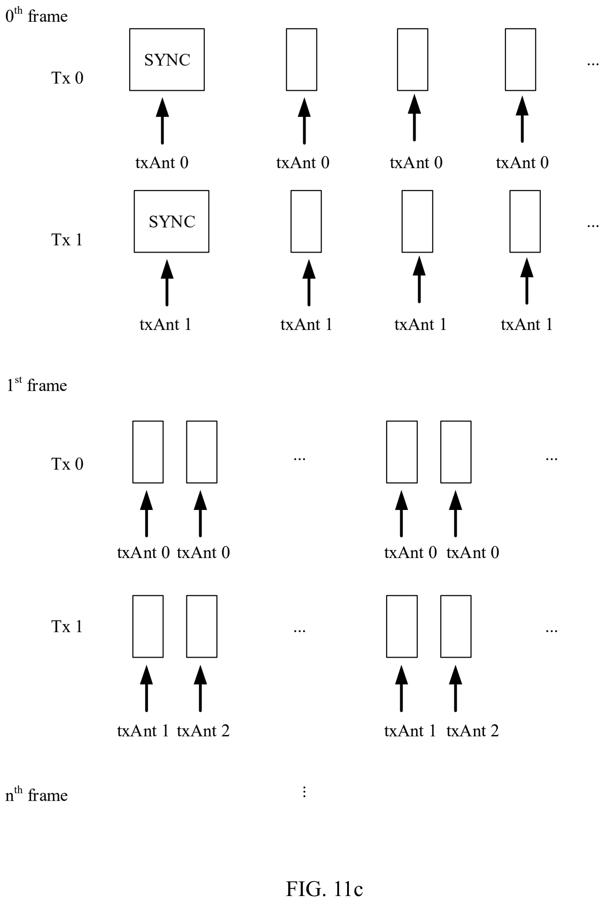

FIG. 11a is a diagram of a scenario of a phase determining method according to an embodiment of this application. FIG. 11b is a diagram of receiving a frame format corresponding to FIG. 11a. Frames shown in FIG. 11b are shown by using a receive perspective of the responding device B as an example. That is, each antenna shown in FIG. 11b is a receive antenna in the responding device B. Frames shown in FIG. 11c are shown by using a transmit perspective of the initiating device A as an example. That is, each antenna shown in FIG. 11c is a transmit antenna in the initiating device A. Based on FIG. 11a and FIG. 11b, the responding device B may determine an AOA, and based on FIG. 11c, the responding device B may determine an AOD.

When the responding device B determines the AOA, a difference between the scenario shown in FIG. 11a and the scenario shown in FIG. 7a lies in that the responding device B in FIG. 11a may receive each frame separately based on a receive channel 0 (for example, Rx 0) and a receive channel 1 (for example, Rx 1). As shown in FIG. 10a, because the receive channel 1 corresponds to an antenna 1 and an antenna 2, when receiving each frame by using the receive channel 1, the responding device B may switch, in turn, the antenna 1 and the antenna 2 that correspond to the receive channel 1, to receive different segments of a CTS in the radio frame in turn. For example, for a first segment group, the responding device B may receive different segments in the first segment group by using different antennas. For example, for a second segment group, the responding device B may receive segments in the second segment group by using different antennas in sequence. Therefore, for a specific method in the scenario shown in FIG. 11a, refer to the foregoing descriptions in FIG. 6, FIG. 7a, and the like. Details are not described herein again. By analogy, for a difference between FIG. 11c and FIG. 7c, similarly refer to the difference between FIG. 11a and FIG. 7a. For example, when the responding device B determines the AOD, as shown in FIG. 11c, the initiating device A may send the radio frame separately by using a transmit channel 0 (for example, Tx 0) and a transmit channel 1 (for example, Tx 1). As shown in FIG. 10b, because the transmit channel 1 corresponds to the antenna 1 and the antenna 2, when sending the radio frame by using the transmit channel 1, the initiating device A may send different segments of the CTS in the radio frame in turn. For related descriptions of determining the AOD by the responding device B, refer to the foregoing descriptions, as shown in FIG. 6, FIG. 7a, and the like. Details are not described herein again.

Example 5

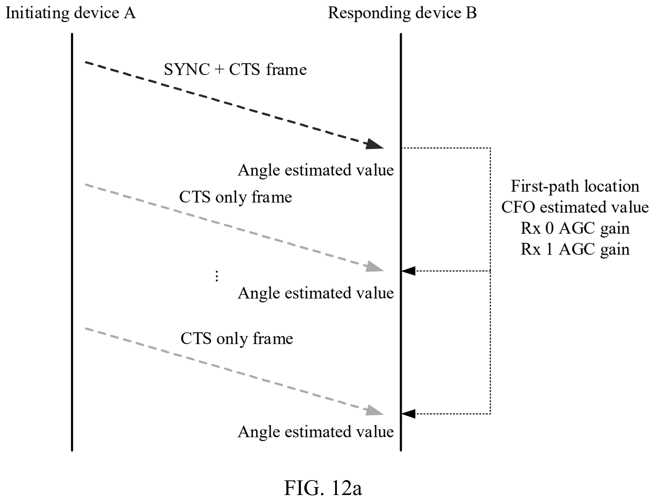

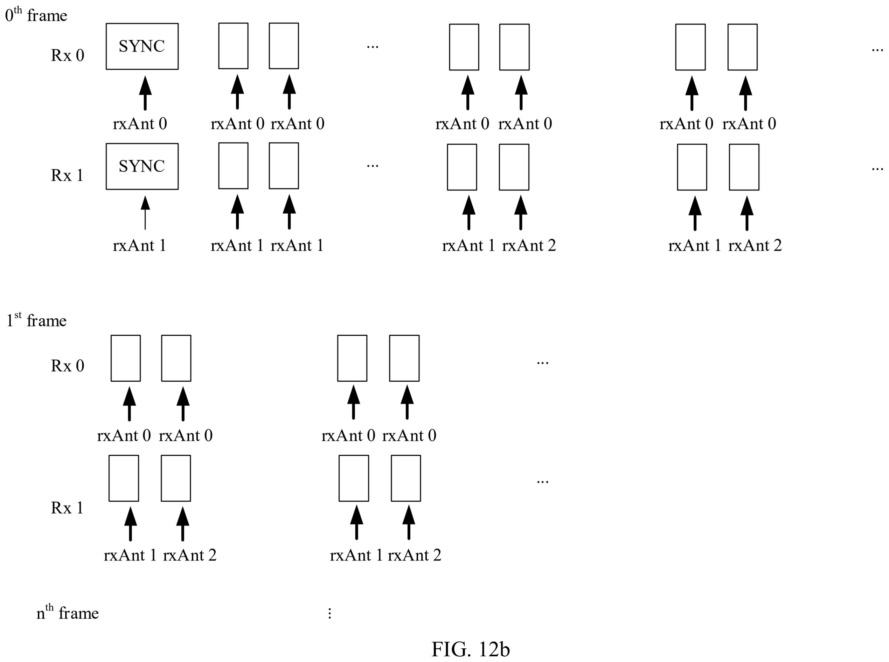

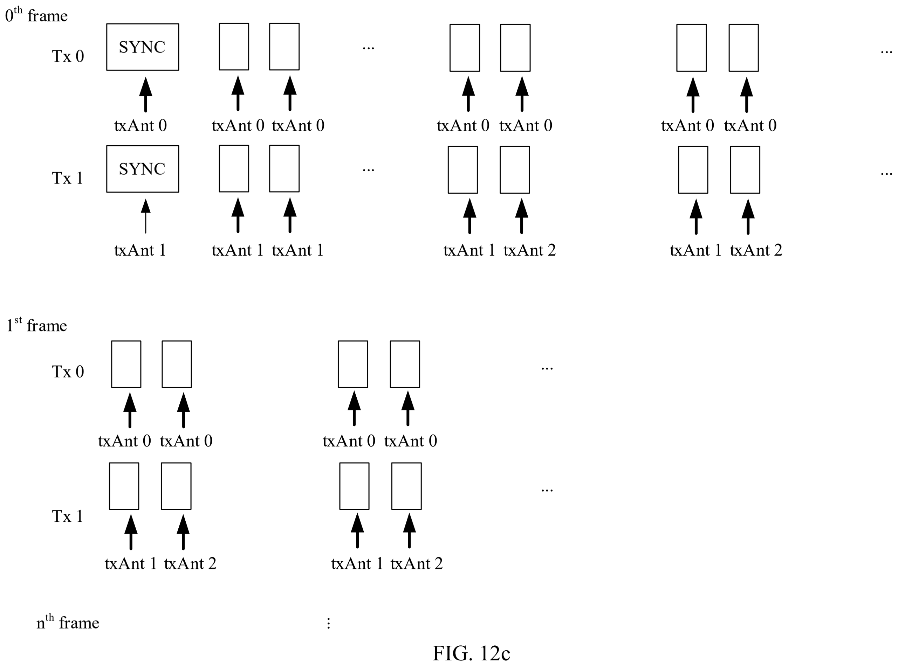

FIG. 12a is a diagram of a scenario of a phase determining method according to an embodiment of this application. FIG. 12b is a diagram of receiving a frame format corresponding to FIG. 12a. Frames shown in FIG. 12b are shown by using a receive perspective of the responding device B as an example. That is, each antenna shown in FIG. 12b is a receive antenna in the responding device B. Frames shown in FIG. 12c are shown by using a transmit perspective of the initiating device A as an example. That is, each antenna shown in FIG. 12c is a transmit antenna in the initiating device A. Based on FIG. 12a and FIG. 12b, the responding device B may determine an AOA, and based on FIG. 12c, the responding device B may determine an AOD.

For a difference between FIG. 12a and FIG. 8a, refer to related descriptions of Example 4. Details are not described herein again. For example, when the responding device B determines the AOA, as shown in FIG. 12b, the responding device B may receive each frame separately by using a receive channel 0 (for example, Rx 0) and a receive channel 1 (for example, Rx 1). In addition, when receiving each frame by using the receive channel 1, the responding device B may switch, in turn, the antenna 1 and the antenna 2 that correspond to the receive channel 1, to receive different segments of a CTS in the radio frame in turn.

For example, when the responding device B determines the AOD, as shown in FIG. 12c, the initiating device A may send the radio frame separately by using a transmit channel 0 (for example, Tx 0) and a transmit channel 1 (for example, Tx 1). When sending the radio frame by using the transmit channel 1, the initiating device A may send different segments of the CTS in the radio frame in turn.

Example 6

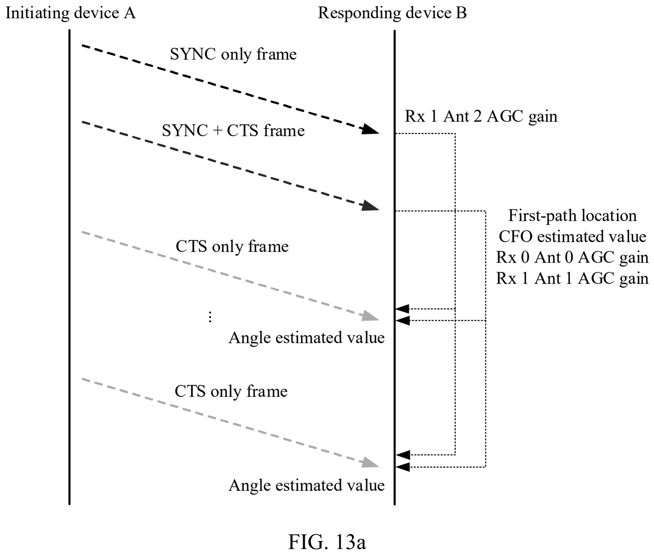

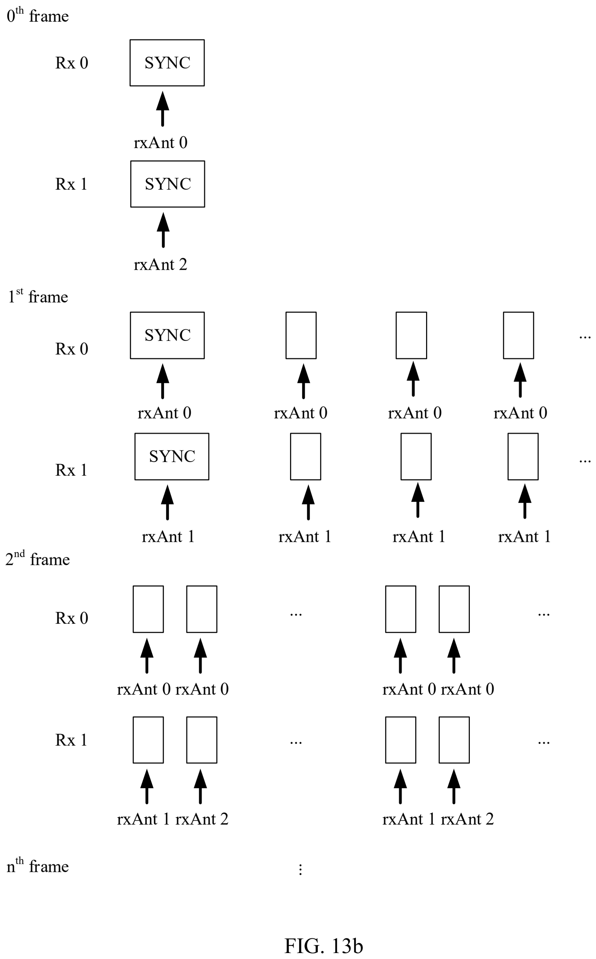

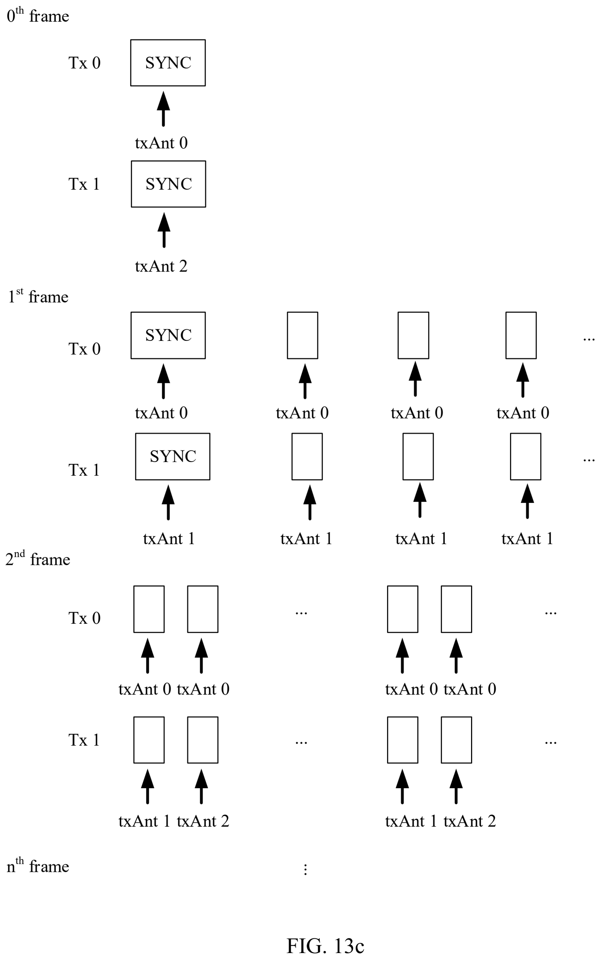

FIG. 13a is a diagram of a scenario of a phase determining method according to an embodiment of this application. FIG. 13b is a diagram of receiving a frame format corresponding to FIG. 13a. Frames shown in FIG. 13b are shown by using a receive perspective of the responding device B as an example. That is, each antenna shown in FIG. 13b is a receive antenna in the responding device B. Frames shown in FIG. 13c are shown by using a transmit perspective of the initiating device A as an example. That is, each antenna shown in FIG. 13c is a transmit antenna in the initiating device A. Based on FIG. 13a and FIG. 13b, the responding device B may determine an AOA, and based on FIG. 13c, the responding device B may determine an AOD.

For a difference between FIG. 13a and FIG. 9a, refer to related descriptions of Example 4. Details are not described herein again. For example, when the responding device B determines the AOA, as shown in FIG. 13b, the responding device B may receive the 0th frame separately by using a receive channel 0 (for example, Rx 0) and an antenna 2 (for example, rxAnt 2) that corresponds to a receive channel 1 (for example, Rx 1), receive the 1st frame by using the receive channel 0 and an antenna 1 (for example, rxAnt 1) that corresponds to the receive channel 1, and receive the 2nd frame by using the receive channel 0, and receive different segments of the CTS in the 2nd frame by switching, in turn, the antenna 1 and the antenna 2 that correspond to the receive channel 1. For a process (as shown in FIG. 13c) in which the initiating device A sends the radio frame, adaptively refer to the process in which the responding device B receives the radio frame. Details are not described herein again.

For each radio frame in Example 4 to Example 6, refer to related descriptions of Example 1 to Example 3, or refer to the foregoing Implementation 1 to Implementation 5.

In the foregoing embodiments (including various examples), for a part that is not described in detail in one embodiment, refer to other embodiments.

Communication apparatuses provided in embodiments of this application are described below.

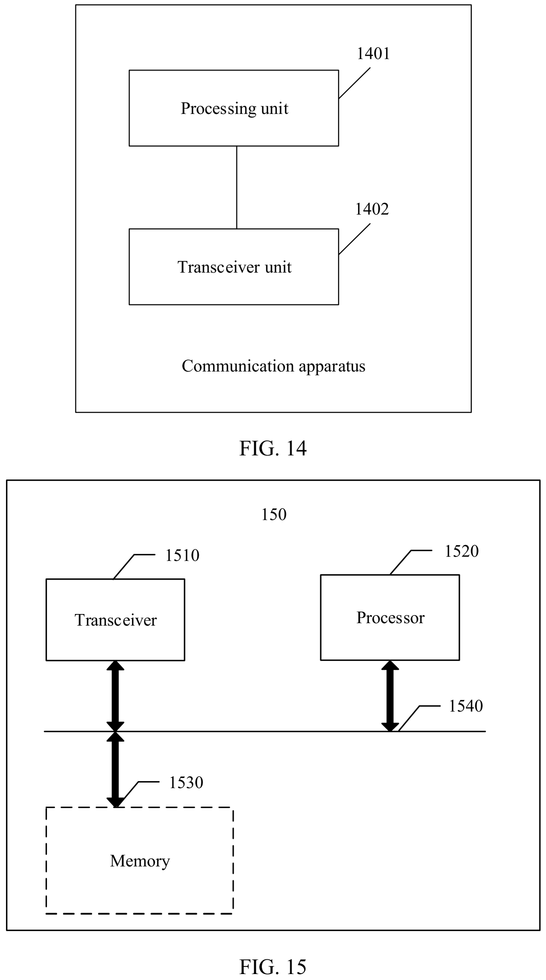

In this application, the communication apparatuses are divided into functional modules based on the foregoing method embodiments. For example, each functional module may be obtained through division corresponding to each function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes, in detail with reference to FIG. 14 to FIG. 16, the communication apparatuses in embodiments of this application.

FIG. 14 is a diagram of a structure of a communication apparatus according to an embodiment of this application. As shown in FIG. 14, the communication apparatus includes a processing unit 1401 and a transceiver unit 1402. The transceiver unit 1402 may implement a corresponding communication function, and the processing unit 1401 is configured to process data. For example, the transceiver unit 1402 may also be referred to as a communication interface, a communication unit, or the like.

In some embodiments of this application, the communication apparatus may be configured to perform an action performed by the transmit end in the foregoing method embodiments. In this case, the communication apparatus may be the transmit end or a component (such as a chip, a system, or a module) that may be configured at the transmit end. The transceiver unit 1402 is configured to perform a transmitting and receiving related operation of the transmit end in the foregoing method embodiments. The processing unit 1401 is configured to perform a processing related operation of the transmit end in the foregoing method embodiments. The communication apparatus may be configured to perform the steps, the functions, or the like performed by the transmit end in the foregoing method embodiments.

The processing unit 1401 is configured to generate a first frame.

The transceiver unit 1402 is configured to send the first frame.

That the transceiver unit 1402 is configured to send the first frame may include: The transceiver unit 1402 may send the first frame to a receive end by using a transmit antenna, or the transceiver unit 1402 may output the first frame from the processing unit 1401. Therefore, for ease of understanding, the following describes the communication apparatus shown in FIG. 14 by using sending or output as an example. Descriptions of the transceiver unit are also applicable in the following. Details are not described in detail below.

For example, the transceiver unit 1402 is further configured to send or output a second frame.

For example, the processing unit 1401 is further configured to generate the second frame.

For example, the transceiver unit 1402 is further configured to send or output a third frame.

For example, the processing unit 1401 is further configured to generate the third frame.

Still refer to FIG. 14. In some other embodiments of this application, the communication apparatus may be configured to perform an action performed by the receive end in the foregoing method embodiments. In this case, the communication apparatus may be the receive end or a component (such as a chip, a system, or a module) that may be configured at the receive end. The transceiver unit 1402 is configured to perform a transmitting and receiving related operation of the receive end in the foregoing method embodiments. The processing unit 1401 is configured to perform a processing related operation of the receive end in the foregoing method embodiments. That is, the communication apparatus may be configured to perform the steps, the functions, or the like performed by the receive end in the foregoing method embodiments.

The transceiver unit 1402 is configured to receive the first frame.

The processing unit 1401 is configured to determine phase information based on the first frame.

That the transceiver unit 1402 is configured to receive the first frame may include: The transceiver unit 1402 may receive the first frame by using a receive antenna, or the transceiver unit 1402 inputs the first frame to the processing unit 1401. Therefore, for ease of understanding, the following describes the communication apparatus shown in FIG. 14 by using receiving or input as an example.

For example, the transceiver unit 1402 is further configured to receive or input the second frame.

For example, the processing unit 1401 is further configured to determine the phase information based on the first frame and the second frame.

For example, the transceiver unit 1402 is further configured to receive or input the third frame.

For example, the processing unit 1401 is further configured to determine the phase information based on the first frame and the third frame.

For example, the processing unit 1401 is further configured to determine the phase information based on the first frame, the second frame, and the third frame.

Optionally, the communication apparatus may further include a storage unit. The storage unit may be configured to store instructions and/or data. The processing unit 1401 may read the instructions and/or the data in the storage unit, so that the communication apparatus implements the foregoing method embodiments. For example, the storage unit may be configured to store at least one of the following: a first time interval, a second time interval, a segment length, a CTS, and the like.

It may be understood that, the foregoing specific descriptions of the transceiver unit and the processing unit are merely examples. For specific functions, steps, or the like performed by the transceiver unit and the processing unit, refer to the foregoing method embodiments. Details are not described herein again. It may be understood that the foregoing descriptions of the processing unit and the transceiver unit are merely examples. For descriptions of the foregoing terms, refer to the method embodiments. For example, for descriptions of the first frame, the second frame, the third frame, the first CTS, the second CTS, the first segment group, the second segment group, the first time interval, the second time interval, and the like, refer to the foregoing method embodiment, and details are not described herein again.

The foregoing describes the communication apparatus in this embodiment of this application. The following describes possible product forms of the communication apparatus. It should be understood that a product in any form having the functions of the communication apparatus described in FIG. 14 falls within the protection scope of embodiments of this application.

In a possible implementation, in the communication apparatus shown in FIG. 14, the processing unit 1401 may be one or more processors, and the transceiver unit 1402 may be a transceiver. Alternatively, the transceiver unit 1402 may be a sending unit and a receiving unit, where the sending unit may be a transmitter, the receiving unit may be a receiver, and the sending unit and the receiving unit are integrated into one component, for example, a transceiver. In this embodiment of this application, the processor and the transceiver may be coupled, or the like. A manner of a connection between the processor and the transceiver is not limited in embodiments of this application. In a process of performing the foregoing methods, a process of sending information in the foregoing methods may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing methods may be understood as a process of receiving the input information by the processor. When the processor receives the input information, the transceiver receives the information, and inputs the information into the processor. Further, after the transceiver receives the information, other processing may need to be performed on the information before processed information is input into the processor.

As shown in FIG. 15, the communication apparatus 150 includes one or more processors 1520 and a transceiver 1510.

For example, when the communication apparatus is configured to perform the steps, the methods, or the functions performed by the transmit end, the processor 1520 is configured to generate a first frame, and the transceiver 1510 is configured to send the first frame.

For example, the processor 1520 is further configured to generate a second frame, and the transceiver 1510 is further configured to send the second frame.

For example, the processor 1520 is further configured to generate a third frame, and the transceiver 1510 is further configured to send the third frame.

For example, when the communication apparatus is configured to perform the steps, the methods, or the functions performed by the receive end, the transceiver 1510 is configured to receive the first frame; and the processor 1520 is configured to determine phase information based on the first frame.

For example, the transceiver 1510 is further configured to receive the second frame. The processor 1520 is further configured to determine the phase information based on the first frame and the second frame.

For example, the transceiver 1510 is further configured to receive the third frame. The processor 1520 is further configured to determine the phase information based on the first frame and the third frame.

For example, the processor 1520 is further configured to determine the phase information based on the first frame, the second frame, and the third frame.

It may be understood that for specific descriptions of the processor and the transceiver, refer to the descriptions of the processing unit and the transceiver unit shown in FIG. 14. Details are not described herein again. For descriptions of the foregoing terms, refer to the method embodiments. For example, for descriptions of the first frame, the second frame, the third frame, the first CTS, the second CTS, the first segment group, the second segment group, the first time interval, the second time interval, and the like, refer to the foregoing method embodiment, and details are not described herein again.

In various implementations of the communication apparatus shown in FIG. 15, the transceiver may include a receiver and a transmitter. The receiver is configured to perform a receiving function (or operation). The transmitter is configured to perform a transmitting function (or operation). The transceiver is configured to communicate with another device/apparatus through a transmission medium.

Optionally, the communication apparatus 150 may further include one or more memories 1530, configured to store program instructions, data, and/or the like. The memory 1530 is coupled to the processor 1520. Coupling in this embodiment of this application may be indirect coupling or a communication connection between apparatuses, units, or modules in an electrical form, a mechanical form, or another form, and is used for information exchange between the apparatuses, the units, or the modules. The processor 1520 may cooperate with the memory 1530. The processor 1520 may execute the program instructions stored in the memory 1530. Optionally, at least one of the one or more memories may be included in the processor. Optionally, the one or more memories may be configured to store the first time interval, the second time interval, and the like.

A specific connection medium among the transceiver 1510, the processor 1520, and the memory 1530 is not limited in this embodiment of this application. In this embodiment of this application, in FIG. 15, the memory 1530, the processor 1520, and the transceiver 1510 are connected through a bus 1540. The bus is indicated by a thick line in FIG. 15. A manner of connection between other components is merely an example for description, and is not limited. The bus may be classified into an address bus, a data bus, a control bus, and the like. For ease of representation, only one thick line is used to represent the bus in FIG. 15, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in this embodiment of this application may alternatively be a circuit or any other apparatus that can implement a storage function, and is configured to store program instructions and/or data.

For example, the processor 1520 is mainly configured to: process a communication protocol and communication data, control the entire communication apparatus, execute a software program, and process data of the software program. The memory 1530 is mainly configured to store the software program and data. The transceiver 1510 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, such as a touchscreen, a display, or a keyboard, is mainly configured to: receive data entered by a user and output data to the user.

After the communication apparatus is powered on, the processor 1520 may read the software program in the memory 1530, interpret and execute instructions of the software program, and process data of the software program. When data needs to be transmitted in a wireless manner, the processor 1520 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave through the antenna. When data is sent to the communication apparatus, the radio frequency circuit receives a radio frequency signal through the antenna, converts the radio frequency signal into a baseband signal, and outputs the baseband signal to the processor 1520. The processor 1520 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may alternatively include more components than those shown in FIG. 15, or the like. This is not limited in this embodiment of this application. The methods performed by the processor and the transceiver are merely examples. For specific steps performed by the processor and the transceiver, refer to the methods described above.

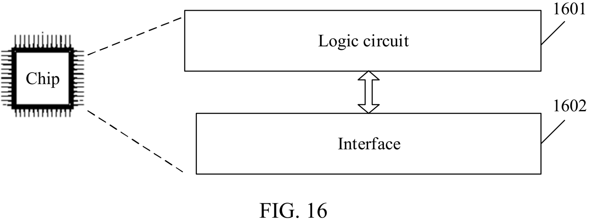

In another possible implementation, in the communication apparatus shown in FIG. 14, the processing unit 1401 may be one or more logic circuits. The transceiver unit 1402 may be an input/output interface that is also referred to as a communication interface, an interface circuit, an interface, or the like. Alternatively, the transceiver unit 1402 may be a sending unit and a receiving unit. The sending unit may be an output interface, and the receiving unit may be an input interface. The sending unit and the receiving unit are integrated into one unit, for example, an input/output interface. As shown in FIG. 16, a communication apparatus shown in FIG. 16 includes a logic circuit 1601 and an interface 1602. That is, the processing unit 1401 may be implemented by using the logic circuit 1601, and the transceiver unit 1402 may be implemented by using the interface 1602. The logic circuit 1601 may be a chip, a processing circuit, an integrated circuit, a system on chip (system on chip, SoC) chip, or the like. The interface 1602 may be a communication interface, an input/output interface, a pin, or the like. For example, FIG. 16 shows an example in which the communication apparatus is a chip. The chip includes the logic circuit 1601 and the interface 1602.

In this embodiment of this application, the logic circuit and the interface may be coupled to each other. A specific manner of connection between the logic circuit and the interface is not limited in this embodiment of this application.

For example, when the communication apparatus is configured to perform the methods, the functions, or the steps performed by the transmit end, the logic circuit 1601 is configured to generate a first frame, and the interface 1602 is configured to output the first frame.

For example, the logic circuit 1601 is further configured to generate a second frame, and the interface 1602 is further configured to output the second frame.

For example, the logic circuit 1601 is further configured to generate a third frame, and the interface 1602 is further configured to output the third frame.

For example, when the communication apparatus is configured to perform the methods, the functions, or the steps performed by the receive end, the interface 1602 is configured to input the first frame; and the logic circuit 1601 is configured to determine phase information based on the first frame.

For example, the interface 1602 is further configured to input the second frame; and the logic circuit 1601 is further configured to determine the phase information based on the first frame and the second frame.

For example, the interface 1602 is further configured to input the third frame; and the logic circuit 1601 is further configured to determine the phase information based on the first frame and the third frame.

For example, the logic circuit 1601 is further configured to determine the phase information based on the first frame, the second frame, and the third frame.

For descriptions of the foregoing terms, refer to the method embodiments. For example, for descriptions of the first frame, the second frame, the third frame, the first CTS, the second CTS, the first segment group, the second segment group, the first time interval, the second time interval, and the like, refer to the foregoing method embodiment, and details are not described herein again.

It may be understood that the communication apparatus shown in this embodiment of this application may implement the methods provided in embodiments of this application in a form of hardware or in a form of software. This is not limited in this embodiment of this application.

For specific implementations of embodiments shown in FIG. 16, refer to the foregoing embodiments. Details are not described herein again.

An embodiment of this application further provides a wireless communication system. The wireless communication system includes a transmit end and a receive end. The transmit end and the receive end may be configured to perform the method in any one of the foregoing embodiments. Alternatively, for the transmit end and the receive end, refer to the communication apparatuses shown in FIG. 14 to FIG. 16.

In addition, this application further provides a computer program. The computer program is used to implement operations and/or processing performed by the transmit end in the methods provided in this application.

This application further provides a computer program. The computer program is used to implement operations and/or processing performed by the receive end in the methods provided in this application.

This application further provides a computer-readable storage medium. The computer-readable storage medium stores computer code. When the computer code is run on a computer, the computer is enabled to perform operations and/or processing performed by the transmit end in the methods provided in this application.

This application further provides a computer-readable storage medium. The computer-readable storage medium stores computer code. When the computer code is run on a computer, the computer is enabled to perform operations and/or processing performed by the receive end in the methods provided in this application.

This application further provides a computer program product. The computer program product includes computer code or a computer program. When the computer code or the computer program is run on a computer, operations and/or processing performed by the transmit end in the methods provided in this application are/is performed.

This application further provides a computer program product. The computer program product includes computer code or a computer program. When the computer code or the computer program is run on a computer, operations and/or processing performed by the receive end in the methods provided in this application are/is performed.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement technical effect of the solutions provided in embodiments of this application.

In addition, the functional units in embodiments of this application may be integrated into one processing unit, each of the units may exist alone physically, or two or more units may be integrated into one unit. The integrated unit may be implemented in a form of hardware, or may be implemented in a form of a software functional unit.

When an integrated unit is implemented in a form of a software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A phase determining method, wherein the method comprises:

   generating a first frame, wherein the first frame comprises a first channel impulse response CIR training sequence CTS, the first CTS comprises at least two segment groups, a time interval between adjacent segments in each segment group is a first time interval, a time interval between adjacent segment groups in the at least two segment groups is a second time interval, and the second time interval is greater than the first time interval; and
   sending the first frame.

2. The method according to claim 1, wherein the first frame further comprises a synchronization field.

3. The method according to claim 1 or 2, wherein before sending the first frame, the method further comprises:
   sending a second frame, wherein the second frame comprises a synchronization field and a second CTS.

4. The method according to claim 3, wherein the second CTS comprises at least two segment groups, a time interval between adjacent segments in each segment group is the first time interval, a time interval between adjacent segment groups in the at least two segment groups is the second time interval, and the second time interval is greater than the first time interval.

5. The method according to any one of claims 1 to 4, wherein before sending the first frame, the method further comprises:
   sending a third frame, wherein the third frame comprises a synchronization field.

6. The method according to any one of claims 1 to 5, wherein the at least two segment groups comprise a first segment group, and a quantity of segments in the first segment group is determined based on a quantity of receive antennas in a receive end that are used for receiving the first frame.

7. The method according to claim 6, wherein each segment in the first segment group corresponds to one receive antenna that is in the receive end and that is used for receiving the first frame.

8. The method according to any one of claims 1 to 5, wherein the at least two segment groups comprise a first segment group, and a quantity of segments in the first segment group is determined based on a quantity of transmit antennas in a transmit end that are used for sending the first frame.

9. The method according to claim 8, wherein each segment in the first segment group corresponds to one transmit antenna that is in the transmit end and that is used for sending the first frame.

10. The method according to any one of claims 1 to 9, wherein the method is applied to an ultra-wide band UWB system.

11. A phase determining method, wherein the method comprises:

    receiving a first frame, wherein the first frame comprises a first channel impulse response CIR training sequence CTS, the first CTS comprises at least two segment groups, a time interval between adjacent segments in each segment group is a first time interval, a time interval between adjacent segment groups in the at least two segment groups is a second time interval, and the second time interval is greater than the first time interval; and

determining phase information based on the first frame.

12. The method according to claim 11, wherein the first frame further comprises a synchronization field.

13. The method according to claim 11 or 12, wherein before receiving the first frame, the method further comprises:

receiving a second frame, wherein the second frame comprises a synchronization field and a second CTS.

14. The method according to claim 13, wherein the second CTS comprises at least two segment groups, a time interval between adjacent segments in each segment group is the first time interval, a time interval between adjacent segment groups in the at least two segment groups is the second time interval, and the second time interval is greater than the first time interval.

15. The method according to any one of claims 11 to 14, wherein before receiving the first frame, the method further comprises:

receiving a third frame, wherein the third frame comprises a synchronization field.

16. The method according to any one of claims 12 to 15, wherein the method further comprises:

performing automatic gain control AGC adjustment based on the synchronization field, to obtain an AGC gain of a receive antenna that is in a receive end and that is used for receiving the first frame.

17. The method according to any one of claims 11 to 16, wherein the receive end comprises at least two receive channels, and receiving the first frame comprises:

receiving the first frame by using each receive channel in the at least two receive channels.

18. The method according to any one of claims 11 to 17, wherein the phase information comprises an angle of arrival AOA; and

the at least two segment groups comprise a first segment group, and a quantity of segments in the first segment group is determined based on a quantity of receive antennas in the receive end that are used for receiving the first frame.

19. The method according to claim 18, wherein each segment in the first segment group corresponds to one receive antenna that is in the receive end and that is used for receiving the first frame.

20. The method according to any one of claims 11 to 17, wherein the phase information comprises an angle of departure AOD; and

the at least two segment groups comprise a first segment group, and a quantity of segments in the first segment group is determined based on a quantity of transmit antennas in a transmit end that are used for sending the first frame.

21. The method according to claim 20, wherein each segment in the first segment group corresponds to one transmit antenna that is in the transmit end and that is used for sending the first frame.

22. The method according to any one of claims 11 to 21, wherein the method is applied to an ultra-wide band UWB system.

23. A communication apparatus, comprising units configured to perform the method according to any one of claims 1 to 22.

24. A communication apparatus, comprising a processor, wherein the processor is configured to perform the method according to any one of claims 1 to 22.

25. A communication apparatus, comprising a logic circuit and an interface, wherein the logic circuit is coupled to the interface; and

the interface is configured to input and/or output information, and the logic circuit is configured to perform the method according to any one of claims 1 to 22.

26. A computer-readable storage medium, wherein the computer-readable storage medium is configured to store a computer program, and when the computer program is executed, the method according to any one of claims 1 to 22 is performed.

27. A communication system, wherein the communication system comprises a transmit end and a receive end, the transmit end is configured to perform the method according to any one of claims 1 to 10, and the receive end is configured to perform the method according to any one of claims 11 to 22.

| Frame synchronization (SYNC) | Start-of-frame delimiter (SFD) | Physical layer header (PHR) | Physical layer payload (PHY payload) | | |
|---|---|---|---|---|---|

| Frame synchronization (SYNC) | Start-of-frame delimiter (SFD) | Scrambled timestamp sequence (STS) | Physical layer header (PHR) | Physical layer payload (PHY payload) | |
|---|---|---|---|---|---|

| Frame synchronization (SYNC) | Start-of-frame delimiter (SFD) | Physical layer header (PHR) | Physical layer payload (PHY payload) | Scrambled timestamp sequence (STS) | |
|---|---|---|---|---|---|

| Frame synchronization (SYNC) | Start-of-frame delimiter (SFD) | Scrambled timestamp sequence (STS) |
|---|---|---|

FIG. 1

EP 4 716 143 A1

UWB signal

Rx 1    Rx 2    ...    Rx N

FIG. 2a

UWB signal

...

...

Rx

FIG. 2b

Receive channel

AOA

Transmit channel

FIG. 3a

Transmit channel

AOD

Receive channel

FIG. 3b

$\Theta$

$\Theta$

d

Antenna 0    Antenna 1

FIG. 4

FIG. 5a

FIG. 5b

EP 4 716 143 A1

UWB packet

SYNC

CTS (segment 1 to segment M)

Tseg

Tsync

Tgap 0

Tgap 1

Tgap 2

...

Segment 1    Segment 2    Segment 3

Time/time

FIG. 5c

FIG. 5d

| Transmit end | | Receive end |

Generate a first frame, where the first frame includes a first CTS, and the first CTS includes at least two segment groups  —601

First frame  —602

Determine phase information based on the first frame  —603

**FIG. 6**

| Initiating device A | | Responding device B |

SYNC + CTS frame

CTS only frame

⋮

Angle estimated value

First-path location
CFO estimated value
AGC gain

CTS only frame

Angle estimated value

**FIG. 7a**

$0^{th}$ frame

SYNC

rxAnt 0      rxAnt 0      rxAnt 0      rxAnt 0      rxAnt 0

$1^{st}$ frame

...

First segment group

rxAnt 0   rxAnt 1   rxAnt 2     rxAnt 0   rxAnt 1   rxAnt 2

$n^{th}$ frame

FIG. 7b

$0^{th}$ frame

SYNC

txAnt 0      txAnt 0      txAnt 0      txAnt 0      txAnt 0

$1^{st}$ frame

...

txAnt 0   txAnt 1   txAnt 2     txAnt 0   txAnt 1   txAnt 2

$n^{th}$ frame

FIG. 7c

Initiating device A                    Responding device B

SYNC + CTS frame

Angle estimated value

CTS only frame

First-path location
CFO estimated value
AGC gain

Angle estimated value

CTS only frame

Angle estimated value

FIG. 8a

$0^{th}$ frame    SYNC      ☐   ☐   ☐     ...     ☐   ☐   ☐       ☐   ☐   ☐    ...

↑       ↑    ↑    ↑        ↑    ↑    ↑       ↑    ↑    ↑

rxAnt 0    rxAnt 0   rxAnt 0   rxAnt 0      rxAnt 0   rxAnt 1   rxAnt 2      rxAnt 0   rxAnt 1   rxAnt 2

$1^{st}$ frame    ☐   ☐   ☐     ...     ☐   ☐   ☐     ...

↑    ↑    ↑        ↑    ↑    ↑

rxAnt 0   rxAnt 1   rxAnt 2      rxAnt 0   rxAnt 1   rxAnt 2

⋮

$n^{th}$ frame

FIG. 8b

FIG. 8c

EP 4 716 143 A1

Initiating device A

Responding device B

SYNC only frame

SYNC + CTS frame

Ant 1 AGC gain

CTS only frame

First-path location
CFO estimated value
Ant 0 AGC gain

Angle estimated value

CTS only frame

Angle estimated value

FIG. 9a

$0^{th}$ frame | SYNC

↑ rxAnt 1

$1^{st}$ frame | SYNC    ...

↑ rxAnt 0    ↑ rxAnt 0    ↑ rxAnt 0    ↑ rxAnt 0    ↑ rxAnt 0

$2^{nd}$ frame    ...    ...

↑ rxAnt 0  ↑ rxAnt 1    ↑ rxAnt 0  ↑ rxAnt 1

$n^{th}$ frame    ⋮

FIG. 9b

$0^{th}$ frame | SYNC

↑ txAnt 1

$1^{st}$ frame | SYNC     □     □     □     □     ...

↑ txAnt 0    ↑ txAnt 0    ↑ txAnt 0    ↑ txAnt 0    ↑ txAnt 0

$2^{nd}$ frame | □ □     ...     □ □     ...

↑ txAnt 0 ↑ txAnt 1     ↑ txAnt 0 ↑ txAnt 1

$n^{th}$ frame     ⋮

FIG. 9c

UWB signal

Ant 0    Ant 1    Ant 2

Rx 0     Rx 1

FIG. 10a

Ant 0    Ant 1        Ant 2

Tx 0          Tx 1

FIG. 10b

Initiating device A                    Responding device B

SYNC + CTS frame

CTS only frame

First-path location
CFO estimated value
Rx 0 AGC gain
Rx 1 AGC gain

⋮

Angle estimated value

CTS only frame

Angle estimated value

FIG. 11a

$0^{th}$ frame

Rx 0

SYNC

...

rxAnt 0      rxAnt 0      rxAnt 0      rxAnt 0

Rx 1

SYNC

...

rxAnt 1      rxAnt 1      rxAnt 1      rxAnt 1

$1^{st}$ frame

Rx 0

...                                ...

rxAnt 0 rxAnt 0              rxAnt 0 rxAnt 0

Rx 1

...                                ...

rxAnt 1 rxAnt 2              rxAnt 1 rxAnt 2

$n^{th}$ frame

FIG. 11b

$0^{th}$ frame

Tx 0

SYNC

↑

txAnt 0     txAnt 0     txAnt 0     txAnt 0

...

Tx 1

SYNC

↑

txAnt 1     txAnt 1     txAnt 1     txAnt 1

...

$1^{st}$ frame

Tx 0

...

txAnt 0   txAnt 0     txAnt 0   txAnt 0

...

Tx 1

...

txAnt 1   txAnt 2     txAnt 1   txAnt 2

...

$n^{th}$ frame

⋮

FIG. 11c

Initiating device A                    Responding device B

SYNC + CTS frame

Angle estimated value

CTS only frame

First-path location
CFO estimated value
Rx 0 AGC gain
Rx 1 AGC gain

Angle estimated value

CTS only frame

Angle estimated value

FIG. 12a

$0^{th}$ frame

Rx 0 | SYNC | ☐ ☐ ... ☐ ☐ ... ☐ ☐ ...

rxAnt 0    rxAnt 0   rxAnt 0    rxAnt 0   rxAnt 0    rxAnt 0   rxAnt 0

Rx 1 | SYNC | ☐ ☐ ... ☐ ☐ ☐ ☐ ...

rxAnt 1    rxAnt 1   rxAnt 1    rxAnt 1   rxAnt 2    rxAnt 1   rxAnt 2

$1^{st}$ frame

Rx 0 | ☐ ☐    ☐ ☐ ...

rxAnt 0   rxAnt 0     rxAnt 0   rxAnt 0

Rx 1 | ☐ ☐    ☐ ☐ ...

rxAnt 1   rxAnt 2     rxAnt 1   rxAnt 2

$n^{th}$ frame      ⋮

FIG. 12b

EP 4 716 143 A1

0th frame

Tx 0    SYNC    ...    ...

txAnt 0    txAnt 0  txAnt 0    txAnt 0  txAnt 0    txAnt 0  txAnt 0

Tx 1    SYNC    ...    ...

txAnt 1    txAnt 1  txAnt 1    txAnt 1  txAnt 2    txAnt 1  txAnt 2

1st frame

Tx 0    ...

txAnt 0  txAnt 0    txAnt 0  txAnt 0

Tx 1    ...

txAnt 1  txAnt 2    txAnt 1  txAnt 2

nth frame

FIG. 12c

Initiating device A                    Responding device B

SYNC only frame

Rx 1 Ant 2 AGC gain

SYNC + CTS frame

First-path location
CFO estimated value
Rx 0 Ant 0 AGC gain
Rx 1 Ant 1 AGC gain

CTS only frame

Angle estimated value

CTS only frame

Angle estimated value

FIG. 13a

$0^{th}$ frame

Rx 0 — SYNC

↑ rxAnt 0

Rx 1 — SYNC

↑ rxAnt 2

$1^{st}$ frame

Rx 0 — SYNC [ ] [ ] [ ] ...

↑ rxAnt 0    ↑ rxAnt 0    ↑ rxAnt 0    ↑ rxAnt 0

Rx 1 — SYNC [ ] [ ] [ ] ...

↑ rxAnt 1    ↑ rxAnt 1    ↑ rxAnt 1    ↑ rxAnt 1

$2^{nd}$ frame

Rx 0 — [ ] [ ]    ...    [ ] [ ]    ...

↑ rxAnt 0 rxAnt 0       ↑ rxAnt 0 rxAnt 0

Rx 1 — [ ] [ ]    ...    [ ] [ ]    ...

↑ rxAnt 1 rxAnt 2       ↑ rxAnt 1 rxAnt 2

$n^{th}$ frame      ⋮

FIG. 13b

$0^{th}$ frame

Tx 0    SYNC

↑

txAnt 0

Tx 1    SYNC

↑

txAnt 2

$1^{st}$ frame

Tx 0    SYNC    ☐    ☐    ☐    ...

↑         ↑        ↑       ↑

txAnt 0    txAnt 0    txAnt 0    txAnt 0

Tx 1    SYNC    ☐    ☐    ☐    ...

↑         ↑        ↑       ↑

txAnt 1    txAnt 1    txAnt 1    txAnt 1

$2^{nd}$ frame

Tx 0    ☐  ☐    ...    ☐  ☐    ...

↑  ↑            ↑  ↑

txAnt 0 txAnt 0    txAnt 0 txAnt 0

Tx 1    ☐  ☐    ...    ☐  ☐    ...

↑  ↑            ↑  ↑

txAnt 1 txAnt 2    txAnt 1 txAnt 2

$n^{th}$ frame    ⋮

FIG. 13c

FIG. 14

FIG. 15

FIG. 16

## INTERNATIONAL SEARCH REPORT

| International application No. |
| --- |
| **PCT/CN2024/092935** |

**A. CLASSIFICATION OF SUBJECT MATTER**

H04L7/04(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; ENTXTC; CNKI; VEN; USTXT: WOTXT; IEEE: 信道脉冲响应, 片段, 间隔, 组, 相位, 训练序列, 字段, 超宽带, 帧, CIR, CTS, segment?, gap+, UWB, group?, phas+

**C. DOCUMENTS CONSIDERED TO BE RELEVANT**

| Category* | Citation of document, with indication, where appropriate, of the relevant passages | Relevant to claim No. |
| --- | --- | --- |
| X | CN 115706656 A (APPLE INC.) 17 February 2023 (2023-02-17) description, paragraphs [0060]-[0224] | 1-27 |
| A | CN 108419301 A (INTEL IP CORP.) 17 August 2018 (2018-08-17) entire document | 1-27 |
| A | CN 115706920 A (APPLE INC.) 17 February 2023 (2023-02-17) entire document | 1-27 |
| A | CN 115913301 A (HUAWEI TECHNOLOGIES CO., LTD.) 04 April 2023 (2023-04-04) entire document | 1-27 |
| A | WO 2015026070 A1 (LG ELECTRONICS, INC.) 26 February 2015 (2015-02-26) entire document | 1-27 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 July 2024** | **07 August 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT Information on patent family members | | International application No. PCT/CN2024/092935 |
|---|---|---|

| Patent document cited in search report | | | Publication date (day/month/year) | Patent family member(s) | | | Publication date (day/month/year) |
|---|---|---|---|---|---|---|---|
| CN | 115706656 | A | 17 February 2023 | EP | 4130791 | A1 | 08 February 2023 |
| | | | | KR | 20230020928 | A | 13 February 2023 |
| | | | | EP | 4131807 | A1 | 08 February 2023 |
| CN | 108419301 | A | 17 August 2018 | US | 2018084575 | A1 | 22 March 2018 |
| | | | | US | 10440740 | B2 | 08 October 2019 |
| | | | | WO | 2016081126 | A1 | 26 May 2016 |
| | | | | US | 2016143006 | A1 | 19 May 2016 |
| | | | | US | 9699807 | B2 | 04 July 2017 |
| CN | 115706920 | A | 17 February 2023 | None | | | |
| CN | 115913301 | A | 04 April 2023 | None | | | |
| WO | 2015026070 | A1 | 26 February 2015 | US | 2016173662 | A1 | 16 June 2016 |

Form PCT/ISA/210 (patent family annex) (July 2022)

**EP 4 716 143 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310679466